# FASCICULE DE BREVET EUROPEEN

(11) **EP 3 384 999 B1**
(45) Date de publication et mention de la délivrance du brevet: **10.06.2020**
(21) Numéro de dépôt: 18165664.6
(22) Date de dépôt: 04.04.2018
(51) Int. Cl.: B07B 1/20, B03B 9/06, B09B 3/00, B09B 5/00, B29B 17/00, B65G 49/00

(54) **DISPOSITIF DE TRAITEMENT DES DECHETS ET PROCÉDÉ ASSOCIÉ**
VORRICHTUNG UND VERFAHREN ZUR ABFALLVERARBEITUNG
WASTE PROCESSING APPARATUS AND PROCESS

(30) Priorité: 07.04.2017 FR 1753042
(43) Date de publication de la demande: 10.10.2018
(73) Titulaire: Axibio, 92210 Saint-Cloud (FR)
(72) Inventeur: EYRAUD, Marc, 92210 Saint-Cloud (FR); GALY, Pierre André, 92150 Suresnes (FR)
(74) Mandataire: Nony

(56) Documents cités:
- EP-A1- 2 749 360
- WO-A1-2015/050433
- JP-A- 2002 239 408
- JP-B2- 3 666 800
- US-A- 3 233 836

## Description

La présente invention concerne un dispositif de traitement des déchets et un procédé de traitement correspondant permettant de densifier et séparer les déchets fermentescibles d'autres déchets en vue de leur recyclage ou de leur élimination.

### Art antérieur

Les réglementations actuelles obligent tout acteur économique générant plus d'une quantité prédéterminée annuelle de déchets fermentescibles à trier et valoriser ses déchets, notamment via la méthanisation, le compostage ou les productions dites de « chimie verte ». Sont ainsi concernés la restauration collective, les cantines scolaires, les industries agro-alimentaires, les marchés forains, les traiteurs, les collectivités locales et les habitats collectifs.

Les déchets fermentescibles désignent les déchets composés exclusivement de matière organique biodégradable susceptible d'être traitée par compostage ou méthanisation, notamment les fruits et légumes et leurs épluchures, les laitages, les coquilles d'œufs, les restes de repas, notamment les restes de chair de viandes ou poissons, à l'exception des os et des arêtes.

Lors de leur valorisation, les déchets fermentescibles sont transformés en une pulpe énergétique compatible avec les processus de valorisation. Dans le cas de la méthanisation, la pulpe énergétique donne après méthanisation un digestat qui peut être utilisé pour l'épandage dans les champs agricoles. Cette opération s'effectue généralement après le transport des déchets bruts de faible densité provenant de plusieurs acteurs économiques producteurs de déchets fermentescibles dans une installation de traitement. Un tel rassemblement des déchets de faible densité coûte cher en transport et augmente de ce fait la facture liée à leur valorisation. De plus, les déchets fermentescibles se retrouvent souvent mélangés à d'autres déchets non fermentescibles, par exemple des os ou arêtes, des pots ou sacs en plastique, des cannettes, des textiles ou des couverts, des emballages en papier siliconé, des films cellophanes, qu'il faut donc trier afin d'éviter qu'ils ne polluent la pulpe énergétique finale.

Il existe sur le marché des procédés de production de pulpe qui impliquent un broyage ou un séchage des déchets effectué chez le producteur desdits déchets. Ces procédés densifient les déchets avant le transport afin de diminuer les coûts afférents.

Cependant, ces procédés connus présentent chacun des inconvénients.

Le broyage des déchets nécessite actuellement un ajout d'eau qui dilue la pulpe obtenue. Par exemple, à partir de 100 kg de déchets, le procédé de broyage produit entre 130 et 150 kg de pulpe. Bien que réalisant une densification des déchets, le poids de la pulpe n'est pas optimisé, le coût de traitement n'est donc pas optimisé pour le producteur de déchets.

Le séchage par évaporation, pour se faire, nécessite une grande quantité d'énergie. De plus, la matière déshydratée obtenue perd une grande partie de son potentiel méthanogène et nécessite une opération de ré-humidification et d'homogénéisation avant sa valorisation, ce qui augmente de ce fait les coûts.

Le séchage par pressage, consistant à séparer les déchets de l'eau qu'ils contiennent génère deux phases, une phase solide et une phase liquide. La phase solide, n'ayant pas perdu de son potentiel méthanogène, constitue, après ré-humidification et homogénéisation, une pulpe de qualité pour la valorisation. La phase liquide ne peut pas être rejetée dans les eaux usées pour des raisons règlementaire et doit donc être traitée séparément dans un centre spécialisé. Deux collectes et traitement différents sont donc nécessaires. Le séchage par pressage n'apporte donc pas une réponse économique compétitive à la gestion des déchets.

De plus, de tels procédés n'assurent pas une séparation entre la pulpe et les déchets non fermentescibles. Il est donc nécessaire d'ajouter une étape de tri, nommée bio-déconditionnement, qui s'effectue dans des centres industriels spécialisés et dont le coût alourdit encore la facture de traitement et valorisation des biodéchets. Il existe donc un besoin pour disposer d'un procédé et d'un dispositif permettant de faciliter le traitement des déchets fermentescibles, qui soit performant tout en réduisant les coûts afférents, notamment en densifiant les déchets fermentescibles pour optimiser les coûts logistiques et d'autre part en séparant les déchets non fermentescibles des déchets fermentescibles pour supprimer l'opération coûteuse de bio-déconditionnement. Les documents WO 2015/050433 A1 et EP 2 749 360 A1 décrivent des dispositifs de traitement de déchets comportant un crible, un arbre rotatif et des palettes dont la surface utile est oblique par rapport à l'axe de l'arbre rotatif qui les supportent. Aucun de ces documents ne mentionne cependant d'éléments fixes d'interception entre lesquels les palettes passent lors de leur rotation.

### Résumé

L'invention répond à ces besoins, par un premier de ses aspects, à l'aide d'un dispositif de traitement des déchets permettant de densifier et séparer des déchets fermentescibles d'autres déchets non-fermentescibles, ce dispositif comportant :
- un crible sur lequel sont amenés les déchets, le crible s'étendant selon un axe longitudinal et présentant une pluralité d'orifices sur au moins une partie de sa longueur,
- un système de lacération s'étendant au moins partiellement au-dessus du crible, le système de lacération comportant :
   - un arbre rotatif s'étendant selon un axe longitudinal,
   - une pluralité d'éléments d'interception,
   - une pluralité de palettes portés par l'arbre, s'étendant transversalement à l'arbre et évoluant entre les éléments d'interception lors de la rotation de l'arbre, les palettes s'étendant obliquement par rapport à l'axe longitudinal de l'arbre de façon à, lors de la rotation de l'arbre, déplacer les déchets le long du crible vers une sortie de séparation des erreurs de tri, et permettre à au moins une partie des déchets fermentescibles broyés entre les palettes et les éléments d'interception de passer au travers des orifices du crible,
- une cuve de réception et de stockage des déchets fermentescibles ayant traversé les orifices du crible.

Par leur mouvement, les palettes lacèrent les déchets fermentescibles en morceaux de taille suffisamment petite pour passer à travers les orifices du crible. Les déchets non fermentescibles qui sont des matières dures telles que des os très rigides, par exemple les côtelettes, sont cassés en gros éléments qui ne passent pas dans les orifices. Les os fragiles, tels que les os de poulet, sont déchiquetés comme les déchets fermentescibles et passent à travers les orifices du crible pour se mélanger à la pulpe obtenue. De tels déchets dans la pulpe ne posent aucun problème particulier lors de la valorisation, notamment du fait de leur petite taille. Les matières flexibles non fermentescibles telles que les emballages ou pots en plastique sont écrasés et aplatis pour s'étaler contre le crible et ne passent pas au travers de ce dernier. Le dispositif ne lacère donc pas de la même manière tous les déchets et permet d'obtenir une granulométrie différente en fonction du type de déchets qui est facilement triée par le crible. Les déchets non fermentescibles tels que les petits os rigides et les matières flexibles non fermentescibles sont donc amenés vers la sortie de séparation des déchets.

La combinaison de la rotation des palettes et de la présence du crible permet également d'améliorer le rendement du traitement des déchets en améliorant la lacération et ainsi la densification des déchets fermentescibles. En effet, les déchets fermentescibles restant dans le crible peuvent subir plusieurs phases de lacération en passant plusieurs fois entre les éléments d'interception sous l'entraînement des palettes.

Les déchets fermentescibles et non fermentescibles se trouvent donc efficacement séparés, la pulpe étant récupérée dans la cuve et les déchets qui ne passent pas au travers du crible étant récupérés par la sortie de séparation des erreurs de tri. Un tel dispositif ne nécessite pas l'adjonction d'eau pour fonctionner. Le poids de déchets fermentescibles en entrée est sensiblement égal au poids de pulpe en sortie. La pulpe formée est donc optimale énergétiquement et peut être valorisée en l'état sans qu'il soit nécessaire de procéder à des étapes additionnelles de tri.

Le dispositif permet également de densifier les déchets fermentescibles. En effet, avant leur introduction dans le dispositif, ces derniers peuvent présenter une densité d'environ 0,4 kg/L et en sortie, la pulpe peut présenter une densité comprise entre 1 et 1,2 kg/L. Les déchets sont donc plus compacts, ce qui réduit les coûts liés au stockage et au transport notamment, et évite les inconvénients de la déshydratation des déchets.

Un tel dispositif peut aussi bien être positionné chez le producteur de déchets, que sur un point de rassemblement des déchets, notamment hors sol ou enterré.

### Crible

De préférence, le crible est de forme générale cylindrique.

De préférence, le crible est en métal, notamment en acier inoxydable. Le crible peut présenter une plus grande dimension intérieure, notamment un diamètre intérieur, compris entre 15 cm et 50 cm, mieux entre 20 cm et 30 cm, encore mieux entre 23 cm et 28 cm et une longueur supérieure ou égale à 30 cm. Une telle longueur est suffisante pour permettre une bonne séparation des déchets.

De préférence, le crible comporte sur au moins une partie de sa longueur une auge inférieure et une auge supérieure mobiles entre elles entre une position ouverte de maintenance et une position fermée de travail. L'auge supérieure et l'auge inférieure peuvent être reliées entre elles par une charnière et maintenues en position fermée par des moyens de fixation complémentaires, notamment des sauterelles à crochets et des reliefs correspondants. Le fait que le crible puisse être ouvert facilite le nettoyage du dispositif.

De préférence, les orifices précités sont répartis sur au moins une partie de la surface inférieure du crible, la surface supérieure en étant dépourvue. De préférence également, les orifices du crible sont répartis de façon uniforme sur la surface de l'auge inférieure. L'auge inférieure peut comporter sur ses bords des bandes dépourvues d'orifices. De telles bandes permettent notamment de faciliter les opérations de lavage.

Le crible, notamment l'auge inférieure, peut présenter sur au moins une partie de sa surface entre 1300 et 5300 orifices par m²

Les orifices du crible peuvent être présents sur une distance comprise entre 100% et 50 % de la longueur du crible.

Les orifices peuvent être de section circulaire ou en forme de fente. Les orifices du crible peuvent avoir tous la même section. En variante, les orifices du crible sont de sections variables le long de l'axe longitudinal du crible.

Chaque orifice du crible peut présenter une section inférieure ou égale à 5 cm², mieux inférieure ou égale à 4 cm², encore mieux inférieure ou égale à 3 cm², encore mieux inférieure ou égale à 2 cm².

De préférence, le dispositif comporte un système de raclage extérieur du crible, notamment de l'auge inférieure. Un tel système de raclage permet le nettoyage du crible et facilite la récupération dans la cuve de la pulpe qui est restée accrochée au crible.

Le système de raclage peut comporter deux rails fixes s'étendant parallèlement à l'axe longitudinal du crible, sur lesquelles coulisse un racleur comportant au moins un arceau épousant la forme de la partie inférieure du crible. Ainsi, lorsque le racleur se déplace le long des rails, l'arceau détache la pulpe restée accrochée sur le crible.

Le racleur peut comporter deux arceaux espacés entre eux d'une distance inférieure à une demi-longueur de crible.

### Système de lacération des déchets

De préférence, le système de lacération s'étend sur toute la longueur du crible.

L'arbre est, de préférence, entraîné en rotation par un moteur à une vitesse comprise entre 10 tours/min et 100 tours/min, mieux entre 30 tours/min et 80 tours/min.

Les palettes présentent chacune, de préférence, un axe longitudinal perpendiculaire à l'axe longitudinal de l'arbre.

De préférence, les palettes sont toutes de forme identique.

De préférence, les palettes sont toutes orientées de la même manière.

Par « orientation des palettes », on comprend l'orientation générale des palettes par rapport à l'axe longitudinal de l'arbre. Dans le cas de palettes de forme générale plane, l'orientation des palettes est définie par l'orientation du plan d'aplatissement de la palette.

De préférence, chacune des palettes est orientée par rapport à l'axe longitudinal pour former un angle compris entre 10° et 80°.

Les palettes peuvent présenter une longueur comprise entre 70 mm et 210 mm Les palettes peuvent présenter un encombrement axial compris entre 5 mm et 50 mm.

De préférence, les extrémités distales des palettes sont espacées du crible d'une distance comprise entre 0,5 mm et 10 mm.

De préférence, les palettes sont regroupées sur l'arbre de telle sorte que plusieurs palettes occupent une même abscisse. Chaque abscisse à partir desquelles les palettes s'étendent définit un rang de palettes. Deux abscisses consécutives à partir desquelles les palettes s'étendent sont respectivement de rang n et n+1, n étant un nombre entier. Lors de la rotation de l'arbre, les palettes de même rang passent entre les mêmes éléments d'interception.

De préférence, les rangs de palettes sont espacés d'une même distance comprise entre 10 mm et 50 mm, définissant un pas de palettes.

De préférence, au moins trois palettes ont le même rang.

De préférence, les palettes de même rang sont uniformément réparties autour de l'arbre. Par exemple dans le cas de trois palettes de même rang, elles peuvent être disposées à 120° les unes des autres.

Les palettes de rang consécutif peuvent être décalées angulairement entre elles autour de l'arbre. De préférence, elles sont décalées de sorte que, en projection selon l'axe longitudinal de l'arbre, les palettes d'un rang soient entre les palettes du rang suivant le long de l'axe longitudinal.

De préférence, les palettes de rangs pairs sont alignées longitudinalement entre elles et les palettes de rangs impairs sont alignées longitudinalement entre elles, les palettes de rangs pairs étant intercalées angulairement entre les palettes de rangs impairs.

Les éléments d'interception forment entre eux des espaces dans lesquelles les palettes passent lorsque l'arbre est en rotation. L'écartement entre les éléments d'interception est compris entre 10 mm et 50 mm De préférence, l'encombrement axial de la palette est inférieur à l'écartement entre les éléments d'interception. La différence entre l'encombrement axial de la palette et l'écartement entre les éléments d'interception est comprise entre 8 mm et 1 mm, mieux entre 1,5 mm et 3 mm. De préférence, chaque palette est axialement centrée entre deux éléments d'interception consécutifs. Ainsi, les palettes évoluent entre deux éléments d'interception consécutifs le long de l'arbre lors de la rotation de l'arbre sans toucher ces derniers.

De préférence, les palettes et les éléments d'interception s'étendent au-delà de l'ouverture par laquelle les déchets sont introduits dans le dispositif. Cela permet notamment d'assurer que tous les déchets qui ne passent pas dans les orifices du crible subissent une lacération par au moins un passage dans trois rangs de palettes consécutifs.

Le système de lacération peut comporter une portion centrale dans laquelle l'arbre porte les palettes et une portion distale dans laquelle l'arbre porte un filet distal hélicoïdal orienté de façon à déplacer les déchets vers la sortie de séparation des déchets, les déchets se déplaçant de la portion centrale vers la portion distale. De préférence, le filet distal comporte entre 1 et 10 révolutions, mieux entre 1 et 5 révolutions, encore mieux entre 1 et 2 révolutions. De préférence, le crible présente des orifices en regard de la portion centrale et de la portion distale. La portion distale permet de brasser les déchets broyés pour que les déchets fermentescibles de taille suffisamment petite puissent passer dans les orifices du crible tout en entraînant les autres déchets vers la sortie de séparation des déchets.

La portion centrale peut s'étendre axialement sur une distance comprise entre 30 cm et 60 cm.

La portion distale peut s'étendre axialement sur une distance comprise entre 7 cm et 40 cm.

De préférence, les déchets sont introduits dans le dispositif au-dessus de la portion centrale.

Le filet hélicoïdal peut être cranté.

Les éléments d'interception sont préférentiellement des éléments statiques transversaux formant un râtelier entre lesquels les palettes évoluent lors de la rotation de l'arbre.

De préférence, les éléments statiques transversaux sont montés mobiles en rotation autour d'un axe de sorte à pouvoir prendre une position fermée de fonctionnement du système de lacération sensiblement horizontale et une position ouverte de nettoyage du dispositif. L'ouverture des éléments statiques transversaux s'effectue de préférence vers la cuve. Le fait que les éléments statiques transversaux puissent prendre une position ouverte vers la cuve permet, en particulier lorsque l'auge inférieure est également en position ouverte, de pouvoir nettoyer le dispositif et en particulier de pouvoir retirer de ce dernier un déchet bloquant le dispositif, tel qu'un os trop gros ou un sac plastique s'étant enroulé autour des palettes.

De préférence, l'articulation des éléments statiques transversaux est indépendante de l'articulation du crible. Cela facilite le nettoyage de l'auge sous ces éléments.

Les éléments statiques peuvent comporter des dents sur au moins une partie de leur longueur, en particulier au niveau d'une zone se situant à proximité de l'arbre. De préférence, l'extrémité de ces dents est espacée de l'arbre d'une distance inférieure ou égale à 4 mm, mieux inférieure ou égale à 1 mm. Ces dents permettent de limiter l'enroulement sur l'axe des films en matière plastiques.

De préférence, l'ouverture et la fermeture des éléments statiques se fait de façon manuelle.

En variante, le mouvement des éléments statiques entre la position fermée et la position ouverte est commandé par un moteur.

Le dispositif peut comporter un organe de déblocage du système de lacération pour retirer du dispositif un déchet bloquant le système de lacération, tel qu'un os trop gros.

En variante, les éléments d'interception sont des éléments mobiles, notamment des palettes complémentaires portés par un arbre complémentaire s'étendant parallèlement à l'arbre et entraîné en rotation, la rotation de l'arbre complémentaire étant différente de celle de l'arbre, notamment de sens opposé. De préférence, les palettes complémentaires sont réparties sur l'arbre complémentaire de la même manière que les palettes le sont sur l'arbre.

De préférence, les palettes complémentaires sont d'une orientation par rapport à l'axe longitudinal de l'arbre complémentaire qui est inverse de celle des palettes, c'est-à-dire que, si les palettes forment un angle γ avec l'axe longitudinal de l'arbre, les palettes complémentaires forment un angle de 180-γ avec l'axe longitudinal de l'arbre complémentaire.

De préférence, les vitesses de rotation des arbres sont identiques et de sens de rotation opposés. Les arbres peuvent être entraînés par un même moteur.

De préférence, le système de lacération est en un métal, notamment en acier inoxydable.

Le dispositif peut comporter un organe de nettoyage de l'arbre permettant notamment le retrait des sacs en matière plastique qui se seraient enroulés autour de ce dernier. L'organe de nettoyage peut être une pince comportant un bras venant se positionner de part et d'autre de l'arbre lorsqu'il est en rotation pour venir frotter contre ce dernier et couper les sacs en matière plastique qui se seraient enroulés autour. L'organe de nettoyage peut être fixé sur l'organe de poussée qui est décrit ultérieurement.

### Cuve

La cuve s'étend de préférence sur toute la longueur du crible.

De préférence, la cuve présente une capacité comprise entre 80 L et 1000 L, mieux entre 180 L et 700 L. Une telle capacité permet d'avoir un dispositif qui ne soit pas trop encombrant pour être facilement installé chez un producteur de déchets fermentescibles mais permettant néanmoins une bonne capacité de stockage pour éviter que l'enlèvement des déchets fermentescibles ne soit trop fréquemment nécessaire tout en restant adapté à la production réelle.

La cuve est, de préférence, amovible. Ceci permet de faciliter l'enlèvement des déchets fermentescibles traités en enlevant la cuve pleine et en la remplaçant par une cuve vide.

La cuve peut comporter une housse de transport à fermer lorsqu'elle est pleine, notamment à fermer par un collier, et/ou un couvercle cerclé permettant de fermer et de protéger la housse pendant son transport. Ceci permet de faciliter l'enlèvement et le transport tout en limitant les odeurs, améliorant l'hygiène et la propreté.

Le dispositif peut comporter un système de refroidissement de la cuve permettant de maintenir cette dernière à une température inférieure ou égale à 16°C, mieux inférieure ou égale à 10°C. Le système de refroidissement de la cuve permet de garder cette dernière à une température sensiblement inférieure à celle correspondant au départ de la fermentation pour assurer une bonne stabilité de la pulpe permettant d'attendre que la caisse soit pleine pour déclencher la collecte. Les déchets peuvent être traités au fur à mesure de leur production sans qu'il n'y ait de perte de qualité de la pulpe, notamment fermentation de cette dernière. De ce fait, le dispositif peut être directement installé chez le producteur de déchets qui peut alors traiter ses déchets fermentescibles au fur et à mesure en formant la pulpe directement sur site. La cuve peut être collectée ou vidée seulement lorsqu'elle est pleine ou presque pleine. Les coûts de logistique et de transport des déchets se trouvent donc optimisés.

Le système de refroidissement peut être un groupe froid monobloc ou à éléments séparés. La cuve peut comporter un capteur de température connecté, de préférence, à la centrale de contrôle, laquelle génère une alerte lorsque cette température dépasse une température seuil, par exemple de 16°C.

Le dispositif peut être équipé d'un capteur de remplissage, notamment un capteur infrarouge ou ultrasonore et/ou de poids de la cuve, notamment un peson. Un tel capteur permet de déterminer en temps réel le taux de remplissage de la cuve pour indiquer lorsqu'il est nécessaire de procéder à son changement.

La cuve peut comporter un agitateur pour répartir la pulpe. Un tel agitateur est particulièrement utile dans le cas d'un dispositif au moins partiellement enterré car il permet un meilleur remplissage de ce dernier.

Le dispositif peut comporter un organe de traitement des données reçues par les différents éléments du dispositif. Un tel organe de traitement permet une pré-analyse in-situ des données. L'organe de traitement des données peut être connecté à une centrale de contrôle.

Le ou les capteurs peuvent être connectés à l'organe de traitement des données ou à la centrale de contrôle qui, lorsque le poids de la cuve dépasse un certain seuil, par exemple 75% de la limite de remplissage, envoie un message à un opérateur chargé de son enlèvement et de son remplacement.

Le dispositif peut être connecté à une plateforme numérique qui pilote les enlèvements en informant les transporteurs des sites à collecter.

Le dispositif peut comporter une base de données comportant des données pour permettre la rédaction des documents réglementaires relatifs à la gestion des déchets et au bilan environnemental.

Le dispositif peut comporter un système de contrôle d'accès au système permettant notamment l'identification de la personne qui utilise le dispositif.

En variante, la cuve n'est pas amovible, notamment lorsque le dispositif est au moins partiellement enterré. Le volume de la cuve dans cette variante peut atteindre des volumes de 1 m³ à 20 m^{3,} de préférence entre 2 m³ et 7 m³, encore mieux entre 3 m³ et 5 m³.

Elle peut alors être vidée par tout moyen adapté, par exemple par pompage de son contenu.

### Séparation des erreurs de tri

De préférence, le système de séparation des déchets non fermentescibles comporte une grille pouvant passer d'une position d'appui contre l'extrémité distale du crible, à une position écartée du crible permettant le passage des déchets. De préférence, le passage de la position d'appui à la position écartée est automatique au bout d'un nombre prédéterminé d'utilisations du dispositif et/ou se fait lorsque la pression des déchets contenus dans le crible, qui s'exerce contre la grille, est supérieure à une limite prédéfinie. La limite prédéfinie peut être mesurée par l'écartement de la grille par rapport au crible dû à la pression que les déchets exercent contre cette dernière.

La dernière spire du filet hélicoïdal peut compresser les déchets contre la grille.

Le dispositif peut comporter un capteur de la distance entre la grille et le crible. Une telle mesure permet de commander l'ouverture de la grille lorsque la distance entre la grille et le crible dû à la pression exercée par les déchets est supérieure ou égale à un seuil prédéfini. Par exemple, un interrupteur mécanique ou magnétique est amené à changer d'état lors du recul de la grille. En variante, la grille est munie d'une jauge de contrainte qui permet de déclencher l'ouverture de la grille lorsque la pression excède une limite prédéfinie.

La présence d'une telle grille permet d'améliorer encore le tri en permettant le passage des déchets fermentescibles au travers de la grille, les déchets non fermentescibles étant retenu jusqu'à l'ouverture de la grille.

De préférence, lorsque la grille passe de la position d'appui à la position écartée, l'arbre est entraîné en marche arrière sur quelques rotations. Ceci permet que le filet hélicoïdal d'extrémité vienne racler la grille pour faciliter l'élimination des déchets.

La grille présente, de préférence, des orifices, notamment des fentes, réparties autour de l'axe longitudinal de l'arbre. Les orifices peuvent être de forme oblongue et/ou circulaire. De tels orifices permettent le passage dans la cuve des déchets fermentescibles pressés contre la grille.

La grille peut être de forme générale plane. En variante, la grille est de forme générale conique, le sommet du cône étant orienté vers l'intérieur du crible en formant de préférence un angle compris entre 30° et 90°, mieux entre 40° et 60° avec l'axe longitudinal du crible.

La grille peut être montée amovible sur le dispositif. La grille est notamment montée sur un support comportant au moins une gorge complémentaire permettant son maintien en position sur le dispositif, le support étant mobile entre la position d'appui et la position écartée de la grille.

La grille peut comporter une cavité traversante s'étendant d'un bord de cette dernière vers son centre. Une telle cavité reçoit, lors de l'introduction de la grille dans le support, un doigt de positionnement s'étendant notamment du support à l'arbre. La gorge et le doigt de positionnement permettent de guider la grille en position et le doigt de positionnement permet également de boucher la cavité traversante pour éviter que les déchets ne s'échappent de la grille par cette cavité. Par exemple la grille est en forme de U, le doigt de positionnement s'engageant dans la cavité du U lors de son introduction dans le support.

De préférence, l'extrémité distale du crible est, en position d'appui de la grille, en appui contre la grille ou le support sur tout son contour. Ainsi, les déchets ne peuvent pas s'échapper du crible par un autre endroit que les orifices de la grille lorsque cette dernière est en position d'appui.

La grille présente, de préférence, un contour extérieur ayant sensiblement la même forme que la section transversale du crible.

De préférence, la grille est à une distance du crible comprise entre 50 mm et 200 mm en position écartée.

De préférence, l'extrémité du filet distal est espacée de la grille en position d'appui d'une distance comprise entre 0,5 mm et 20 mm

La grille est, de préférence, maintenue en position d'appui par au moins un ressort et/ou au moins un vérin. La grille peut être maintenu en position d'appui par un ressort et son passage en position écartée peut se faire par l'actionnement d'un ou plusieurs vérins. En variante, le crible comporte à son extrémité distale des griffes maintenant la grille en position d'appui par encliquetage, les griffes s'ouvrant pour libérer la grille et lui permettre de s'écarter du crible par l'intermédiaire notamment d'un organe de rappel en position écartée.

La grille peut comporter un organe de raclage sur sa partie externe au crible facilitant l'évacuation de la pulpe par les ouvertures et le nettoyage de la grille. De préférence, l'organe de raclage est monté sur l'arbre, tournant avec ce dernier pour pouvoir enlever les déchets fermentescibles présents à la surface extérieure de la grille, et fixe en translation par rapport à la grille pour suivre le mouvement de translation de cette dernière le long de l'arbre.

Le dispositif peut comporter une goulotte montée fixe par rapport à la grille, permettant aux déchets fermentescibles passant dans les orifices de la grille de tomber dans la cuve de réception et de stockage des déchets fermentescibles. L'organe de raclage assure également l'évacuation de la pulpe de la goulotte vers la cuve de stockage.

Le dispositif comporte, de préférence, un récipient de réception des déchets non fermentescibles sous la grille pour récupérer les déchets qui sont évacués lorsque la grille est en position écartée. Le récipient de réception peut être monté sur le châssis de la machine ou sur l'auge supérieure. Le récipient de réception des déchets non fermentescibles est, de préférence, disposé au-dessus de la cuve et il est de préférence percé pour laisser passer la pulpe qui a été évacuée avec les éléments non fermentescibles

De préférence, le récipient de réception des déchets non fermentescibles est souple. Ceci permet notamment de faciliter son retrait et le changement de la cuve.

Le récipient de réception des déchets non fermentescibles peut présenter un volume compris entre 2L et 25 L, mieux entre 5L et 15 L.

### Alimentation en déchets

Le dispositif comporte, de préférence, une trémie d'alimentation du dispositif en déchets alimentant le système de lacération des déchets.

La trémie d'alimentation peut comporter une trappe de vide-sac.

La trappe de vide- sac peut passer d'une configuration fermée de la trémie d'alimentation à une position ouverte sensiblement horizontale de la trémie, la trappe étant configurée pour recevoir un sac de déchets en position ouverte.

La trappe peut comporter à son extrémité distale un organe de fixation d'un sac de déchets, notamment un crochet, configuré pour coopérer avec un organe d'accrochage d'un sac de déchets, notamment un trou de ce dernier. Une telle trappe permet que, lors du passage en configuration fermée, les déchets se déversent dans le dispositif, le sac restant accroché sur la trappe. Ainsi, à l'ouverture suivante, l'utilisateur n'a qu'à enlever le sac précédent avant de poser un nouveau sac sur la trappe. De préférence, le sac est accroché sur la trappe par son fond et est déposé ouvert sur la trappe de sorte que lors de la fermeture de cette dernière, il se vide naturellement dans le dispositif. La trappe peut également comporter un organe d'assistance à sa fermeture, notamment un vérin, de préférence un ressort à gaz, permettant de faciliter le passage de la configuration ouverte à la configuration fermée.

La trémie d'alimentation peut présenter une hauteur comprise entre 50 cm et 150 cm

De préférence, la trappe présente une forme concave vers la trémie de sorte à aider au positionnement du sac de déchets.

La trappe peut comporter un fond et optionnellement une paroi latérale d'un côté seulement, la trémie comportant une ou deux extensions permettant en position fermée de la trappe de former un encadrement latéral. Ceci facilite le placement du sac sur la trappe.

De préférence, la trémie présente, entre l'axe de rotation de la trappe vide-sac et l'extrémité inférieure de la trémie, un volume de stockage de déchets supérieur ou égal à 30 L.

La trappe peut comporter au moins un élément de protection s'étendant au-dessus du système de lacération lorsque la trappe est en configuration ouverte pour limiter l'accès au système de lacération.

La trémie d'alimentation peut comporter un organe de poussée pour venir en appui sur les déchets déversés dans le dispositif afin de forcer leur passage dans le système de lacération. En particulier, les déchets légers, tels que le pain ou la salade, peuvent avoir tendance à rester dans la trémie d'alimentation et à ne pas passer dans le dispositif du fait de leur poids insuffisant. Dans ce cas, l'organe de poussée se positionne au-dessus des palettes du dispositif pour forcer ces déchets à entrer dans ce dernier.

De préférence, l'organe de poussée comporte une plaque de pression de forme incurvée prenant, sous l'action de l'utilisateur, une position de fermeture du dispositif dans laquelle elle vient se positionner au-dessus des palettes.

L'organe de poussée comporte, de préférence, une poignée s'étendant au moins partiellement à l'extérieur de la trémie pour permettre à l'utilisateur de venir appuyer l'organe de poussée contre les déchets.

L'organe de poussée peut comporter un arceau de garde permettant d'empêcher l'organe de poussée de venir au contact des palettes. L'arceau de garde peut constituer la poignée. L'organe de poussée peut comporter un organe de guidage des déchets dans le système de lacération permettant d'empêcher que les déchets passent derrière la plaque de forme incurvée. L'organe de guidage peut comporter une nappe souple tendue lorsque l'organe de poussée est en position d'appui et se repliant pour permettre l'ouverture de l'organe de poussée.

De préférence, la distance entre l'organe de poussée en position de fermeture du dispositif et l'extrémité des palettes est comprise entre 0,5 mm et 5 cm.

La trappe peut comporter un capteur de poids permettant de déterminer le poids de chaque sac de déchet déposé sur cette dernière. Les données récoltées peuvent être enregistrées et envoyées à la centrale de contrôle pour être analysées.

La trémie peut comporter une grille de tri pour limiter la taille des déchets introduit dans le dispositif. Une telle grille permet également d'éviter que le bas des sacs introduits ne soit en contact avec le système de broyage des déchets, notamment les palettes.

Le fond de la trappe et/ou la grille du fond de la trémie peuvent être aimantés de manière à capter les erreurs de tri métalliques contenues dans les sacs.

De préférence, le dispositif comporte un système d'extraction et de filtrage de l'air provenant de la cuve permettant de réduire, voire d'éliminer les odeurs, notamment un filtre à charbon actif.

Le dispositif peut comporter un capot venant recouvrir le dispositif de sorte que les déchets ne puissent être introduits que par la trémie d'alimentation. De préférence, le capot est amovible pour permettre la maintenance et le nettoyage du dispositif.

Le dispositif peut être totalement hors sol, ou au moins partiellement enterré. Par exemple, seule la cuve peut être enterrée et le système de lacération et de séparation des erreurs de tri, ainsi que la trémie d'alimentation peuvent être hors sol.

En variante, la cuve est fixe par rapport au dispositif et peut être vidée par pompage de la pulpe, notamment à l'aide d'un camion-citerne.

### Autres aspects de l'invention

L'invention a également trait, selon un autre de ses aspects, à un dispositif de traitement de déchets pour densifier et séparer des déchets fermentescibles d'autres déchets non-fermentescibles, le dispositif comportant :
- un crible sur lequel sont amenés les déchets, le crible s'étendant selon un axe longitudinal et présentant une pluralité d'orifices sur au moins une partie de sa longueur,
- un système de lacération des déchets s'étendant au moins partiellement au-dessus du crible, le système de broyage comportant :
   - un arbre s'étendant selon un axe longitudinal,
   - une pluralité d'éléments statiques transversaux montés pivotants sur le dispositif autour d'un axe,
   - une pluralité de palettes portées par l'arbre, s'étendant transversalement à l'arbre et évoluant entre les éléments statiques transversaux lors de la rotation de l'arbre,
   le système de lacération et de transfert étant configuré pour qu'au moins une partie des déchets fermentescibles lacérés puisse passer au travers des orifices du crible,
- une cuve de réception et de stockage des déchets fermentescibles ayant traversé les orifices du crible.

Le fait que les éléments statiques transversaux soient montés mobile en rotation permet de pouvoir nettoyer le dispositif et en particulier de pouvoir retirer de ce dernier un déchet bloquant le dispositif, tel qu'un os trop gros ou un sac plastique s'étant enroulé autour des palettes.

De préférence, les palettes s'étendent obliquement par rapport à l'axe longitudinal de l'arbre de façon à, lors de la rotation de l'arbre, déplacer les déchets le long du crible vers une sortie de collecte de déchets.

Les caractéristiques additionnelles décrites précédemment en relation avec le premier aspect de l'invention sont également applicables à cet aspect de l'invention.

L'invention a également trait, selon un autre de ses aspects, à un dispositif de traitement de déchets pour densifier et séparer des déchets fermentescibles d'autres déchets non fermentescibles, comportant :
- un crible sur lequel sont amenés les déchets, le crible s'étendant selon un axe longitudinal et présentant une pluralité d'orifices sur au moins une partie de sa longueur,
- un système lacération des déchets s'étendant au moins partiellement au-dessus du crible, permettant de déplacer les déchets vers une extrémité distale du crible tout en les lacérant, de sorte qu'au moins une partie des déchets fermentescibles passe au travers des orifices du crible, les déchets restants étant entraînés vers une sortie de séparation des déchets, et
- une cuve de réception et de stockage des déchets fermentescibles ayant traversé le crible,
la sortie de collecte de déchets non fermentescibles comportant une grille pouvant passer d'une position d'appui contre l'extrémité distale du crible, empêchant le passage des déchets, à une position écartée du crible pour permettre le passage des déchets vers un récipient de réception de ces derniers.

La grille de la sortie de séparation des déchets permet de contrôler l'évacuation des déchets qui ne sont pas passés au travers des orifices du crible vers un récipient indépendant de la cuve. Ainsi les déchets fermentescibles sont collectés dans la cuve et les autres déchets sont collectés séparément dans le récipient. Le passage de la position d'appui à la position écartée peut être automatique au bout d'un nombre prédéterminé d'utilisations du dispositif et/ou se faire lorsque la pression des déchets contenus dans le crible, qui s'exerce contre la grille, est supérieure à une limite prédéfinie. La pression des déchets qui s'exerce contre la grille peut être connue via par la distance de recul de la grille sous l'effet de la poussée des déchets. Cela permet de séparer les déchets fermentescibles non évacués au travers du crible des autres déchets. Le passage de la position écartée à la position d'appui peut se faire par rappel élastique, lorsque la pression qu'exerce les déchets est plus faible ou au bout d'un certain temps. La grille permet également de sécuriser le dispositif en empêchant l'accès à l'intérieur du crible, notamment pendant le fonctionnement de ce dernier.

De plus, le fait d'avoir une grille permet que les déchets fermentescibles soient pressés contre cette dernière pour passer de manière fragmentée par les orifices qu'elle comporte et être récupérés dans la cuve. Les déchets fermentescibles sont alors densifiés.

De préférence, le système de lacération comporte :
- un arbre rotatif s'étendant selon un axe longitudinal,
- une pluralité d'éléments statiques transversaux,
- une pluralité de palettes portés par l'arbre, s'étendant transversalement à l'arbre et évoluant entre les éléments statiques transversaux lors de la rotation de l'arbre,
le système de lacération étant configuré pour qu'au moins une partie des déchets fermentescibles broyés entre les palettes et les éléments statiques puisse passer au travers des orifices du crible.

De préférence, les palettes s'étendent obliquement par rapport à l'axe longitudinal de l'arbre de façon à, lors de la rotation de l'arbre, déplacer les déchets le long du crible vers une sortie de collecte de déchets.

Les caractéristiques additionnelles décrites précédemment en relation avec le premier aspect de l'invention sont également applicables à cet aspect de l'invention.

L'invention a également pour objet un procédé de traitement de déchets pour densifier et séparer des déchets fermentescibles d'autres déchets non fermentescibles à l'aide d'un des dispositifs selon l'invention tels que définis précédemment.

De préférence, le procédé est dépourvu d'étape d'injection d'eau.

Le procédé peut comporter une étape d'introduction des déchets dans le dispositif, notamment les étapes de
- positionnement d'un sac de déchets sur la trappe,
- fixation du fond d'un sac de déchets non fermé sur l'organe de fixation de la trappe en configuration ouverte, et/ou
- fermeture de la trappe.

Le procédé peut comporter une étape de nettoyage de la cuve. Le dispositif peut être nettoyé à l'aide de copeaux de bois.

Le procédé peut comporter une étape de transport de la cuve au moins partiellement pleine, de l'entreprise productrice de déchets fermentescibles à une entreprise de traitement telle qu'une entreprise de valorisation tel que la méthanisation, le compostage ou toutes autres applications de la chimie verte.

L'invention a également trait, selon un autre de ses aspects, indépendant ou en combinaison avec ce qui précède, à un dispositif de traitement de déchets pour densifier et séparer des déchets fermentescibles d'autres déchets non fermentescibles à partir de déchets préalablement lacérés, le dispositif comportant :
- un crible s'étendant selon un axe longitudinal et présentant une pluralité d'orifices répartis sur au moins une partie de sa longueur,
- un système de transfert de déchets, préalablement lacérés par tout moyen, permettant de déplacer les déchets vers une extrémité distale du crible de sorte qu'au moins une partie des déchets fermentescibles lacérés passe au travers des orifices du crible, les déchets restants étant entraînés vers une grille,
- une cuve de réception et de stockage des déchets fermentescibles ayant traversé le crible,
la grille pouvant passer d'une position d'appui contre l'extrémité distale du crible, empêchant le passage des déchets, à une position écartée du crible pour permettre le passage des déchets non fermentescibles vers un récipient de réception de ces derniers.

Dans cet aspect de l'invention, la lacération des déchets est effectuée au préalable, le système de lacération décrit précédemment est alors non indispensable, dans le mesure où la lacération effectuée est suffisante pour que les déchets fermentescibles puissent passer dans les orifices du crible. Par exemple, la lacération préalable est effectuée soit par un émotteur adapté, soit préférablement par un équipement comportant un système de lacération avec des palettes et des éléments d'interception ainsi qu'un crible tels que décrits précédemment dans le cadre de l'invention. Cette séparation des deux étapes permet de proposer un équipement économique assurant une densification des biodéchets et des gains très importants de transport.

Ainsi, la lacération des déchets peut être effectuée directement chez le producteur des déchets et l'étape de séparation peut se faire directement dans l'entreprise de valorisation desdits déchets fermentescibles à l'aide du dispositif ci-dessus.

Dans cet aspect de l'invention, le crible, la sortie de collecte de déchets, la cuve et le système d'alimentation peuvent être tels que décrits précédemment en relation avec les autres aspects de l'invention.

Le dispositif peut également comporter un système de lacération tel que décrit précédemment. La présence d'un tel système permet de s'assurer que les déchets sont lacérés selon une granulométrie parfaitement adaptée au dispositif de séparation des déchets non fermentescibles.

Le système de transfert des déchets peut comporter une vis d'Archimède comportant un arbre rotatif s'étendant selon un axe longitudinal et un filet porté par l'arbre, permettant lors de la rotation de l'arbre, le déplacement des déchets dans le sens longitudinal vers la grille. Une telle vis d'Archimède permet également le brassage des déchets avant la sortie de séparation des déchets, ce qui permet d'augmenter la quantité de déchets fermentescibles passant entre les orifices du crible.

L'invention a également pour objet un procédé de traitement de déchets pour densifier et séparer des déchets fermentescibles d'autres déchets non fermentescibles à l'aide du dispositif tel que décrit précédemment.

Le procédé peut comporter les étapes consistant à :
- lacérer les déchets sur leur lieu de production ou sur un lieu de rassemblement des déchets, et
- séparer les déchets fermentescibles des déchets non fermentescibles sur le lieu de valorisation des déchets fermentescibles.

Le procédé peut comporter une étape de nettoyage de la cuve, notamment après livraison sur le site de valorisation.

Le dispositif est, par exemple, nettoyé à l'aide de copeaux de bois.

L'invention a également trait, selon un autre de ses aspects, indépendant ou en combinaison avec ce qui précède, à une trémie d'alimentation d'un dispositif ou d'une cuve en éléments contenus dans un sac comportant une trappe pouvant passer d'une configuration fermée de fermeture de la trémie d'alimentation à une configuration ouverte sensiblement horizontale d'ouverture de la trémie d'alimentation et inversement, la trappe étant configuré pour recevoir le sac et comportant, à son extrémité distale, un organe de fixation d'un sac pour maintenir un sac disposé sur la trappe de sorte que ce dernier se vide dans la trémie d'alimentation lors du passage de la configuration ouverte à la position fermée.

Les éléments peuvent être des déchets tels que décrits précédemment, mais aussi des déchets plus classiques, des matériaux granulaires tels que du sable ou des petits cailloux, ou des poudres.

Une telle trémie d'alimentation permet un vidage facile du contenu de sac et donc une alimentation facile en éléments, déchets ou autre, contenus dans des sacs d'un dispositif. En effet, la trappe étant sensiblement horizontal, il est facile d'y déposer le sac et de le fixer à l'organe de fixation. Le basculement manuel de la trappe permet le déversement des éléments dans le dispositif d'une manière aisée et demandant peu d'effort. La trémie d'alimentation peut être utilisée dans un dispositif tel que décrit précédemment pour son alimentation en déchets.

Les caractéristiques de la trémie d'alimentation décrites précédemment en relation avec le dispositif de traitement des déchets sont également applicables à la trémie d'alimentation ci-dessus, et cela indépendamment d'un dispositif de traitement des déchets.

L'invention a également pour objet un dispositif de traitement de déchets pour densifier et séparer des déchets fermentescibles d'autres déchets non fermentescibles, comportant :
- un crible sur lequel sont amenés les déchets, le crible s'étendant selon un axe longitudinal et présentant une pluralité d'orifices sur au moins une partie de sa longueur,
- un système lacération des déchets s'étendant au moins partiellement au-dessus du crible permettant de déplacer les déchets d'une extrémité proximale à une extrémité distale du crible tout en les lacérant de sorte qu'au moins une partie des déchets fermentescibles passe au travers des orifices du crible, les déchets restants étant entraînés vers une grille, et
- une cuve de réception et de stockage des déchets fermentescibles ayant traversé le crible,
- une trémie d'alimentation telle que décrite précédemment.

L'invention a également pour objet un procédé d'alimentation d'une trémie d'alimentation telle que décrit précédemment en sac, comportant les étapes consistant à :
- ouvrir la trappe en la faisant passer de sa configuration fermée à sa configuration ouverte,
- positionner un sac sur la trappe en configuration ouverte,
- fixer le fond du sac sur l'organe de fixation,
- fermer la trappe en la faisant passer de sa configuration ouverte à sa configuration fermée.

L'invention a également pour objet, selon un autre aspect, indépendant ou en combinaison avec ce qui précède, un sac en film plastique comportant, lorsqu'il est à plat,
- une ouverture à une première extrémité définie par un bord d'ouverture par laquelle le sac est rempli,
- au moins une soudure de fond de sac pour former un bord inférieur fermé et espacé d'une seconde extrémité opposée à la première extrémité,
- un organe d'accrochage du sac disposé entre la soudure et la seconde extrémité pour fixer le sac à un organe de fixation.

De préférence, le sac selon l'invention est adapté à être utilisé sur la trémie d'alimentation selon l'invention. En effet, un tel sac peut être posé avec son ouverture ouverte sur la trappe, son fond peut être fixé par l'organe d'accrochage à l'organe de fixation de la trappe et lorsque la trappe est fermée, les éléments contenus dans le sac peuvent se déverser dans le dispositif, le sac restant accroché à la trappe.

De préférence, la soudure de fond est espacée de la seconde extrémité d'une distance supérieure ou égale à 0,5 cm

L'organe d'accrochage est par exemple un trou dans le sac à fixer dans un crochet, un œillet sur le sac, un crochet à fixer dans un trou ou sur un relief, un organe à encliqueter dans un organe correspondant, une lanière en boucle, une ficelle à nouer ou une pince.

Le sac peut comporter un élément de renfort pour renforcer la solidité de l'organe d'accrochage. L'élément de renfort peut comporter une ou plusieurs soudures additionnelles entre l'organe d'accrochage et la seconde extrémité et/ou une pièce plastique entourant ou constituant l'organe d'accrochage.

De préférence, le sac présente une profondeur maximum dépendant de la hauteur de la trémie d'alimentation. La profondeur maximum est inférieure ou égale à 150 cm

Le sac peut présenter une contenance comprise entre 30 et 150 L.

L'invention a également pour objet une pluralité de sacs tels que décrits précédemment sous forme de rouleaux reliés entre eux par des prédécoupes.

L'invention pourra être mieux comprise à la lecture de la description détaillée qui va suivre, d'exemples non limitatifs de mise en œuvre de celle-ci, et à l'examen du dessin annexé, sur lequel :
- la figure 1 représente schématiquement et en perspective un exemple de dispositif de traitement de déchets, dépourvu de trémie d'alimentation,
- la figure 2 est une vue schématique en coupe du système de lacération du dispositif de traitement de déchets de la figure 1, lacération étant en position écartée,
- la figure 3 est une vue selon III de la figure 2,
- la figure 4 est une vue schématique en perspective du système de lacération selon les figures précédentes, dépourvu de crible,
- la figure 5 est une vue en coupe d'un détail du système de lacération des figures précédentes,
- la figure 6 est une vue du dessus d'un détail du système de lacération des figures précédentes,
- la figure 7 est une vue schématique et en perspective d'un détail du système de lacération des figures précédentes, le crible et les éléments statiques transversaux étant en position ouverte,
- la figure 8 est une vue schématique et en perspective de dos du système de lacération selon les figures précédentes, le crible étant en position ouverte,
- la figure 9 représente schématiquement et en perspective un détail du système de lacération des figures précédentes,
- la figure 10 est une vue schématiquement et en perspective de la grille des dispositifs des figures précédentes, la grille étant en position d'appui,
- la figure 11 est analogue à la figure 10, la grille étant en position écartée,
- la figure 12 représente isolément la grille des dispositifs des figures précédentes,
- la figure 13 est une vue du dispositif selon les figures 1 à 11, le système de raclage étant en position de fin de course,
- la figure 14 représente de façon schématique un exemple de trémie d'alimentation, la trappe étant en position fermée,
- la figure 15 est une vue en coupe selon XV-XV de la figure 14,
- la figure 16 représente la trémie d'alimentation des figures 14 et 15, la trappe étant en position ouverte,
- la figure 17 est une vue schématique et en transparence d'un détail de la trémie d'alimentation,
- la figure 18 est une vue schématique d'un exemple de sac de déchets,
- les figures 19A et 19B sont des variantes de sac de déchets,
- la figure 20 représente une variante de la sortie de séparation des déchets,
- les figures 21A et 21B représente une variante de la sortie de séparation des déchets,
- la figure 22 est une vue en coupe d'une variante de système de lacération, et
- la figure 23 est une vue latéral d'une variante de dispositif selon l'invention.

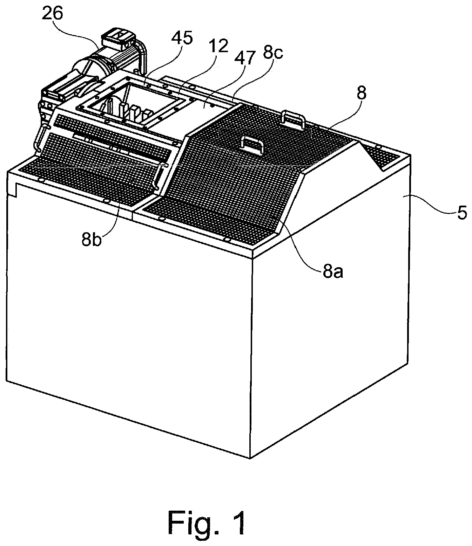

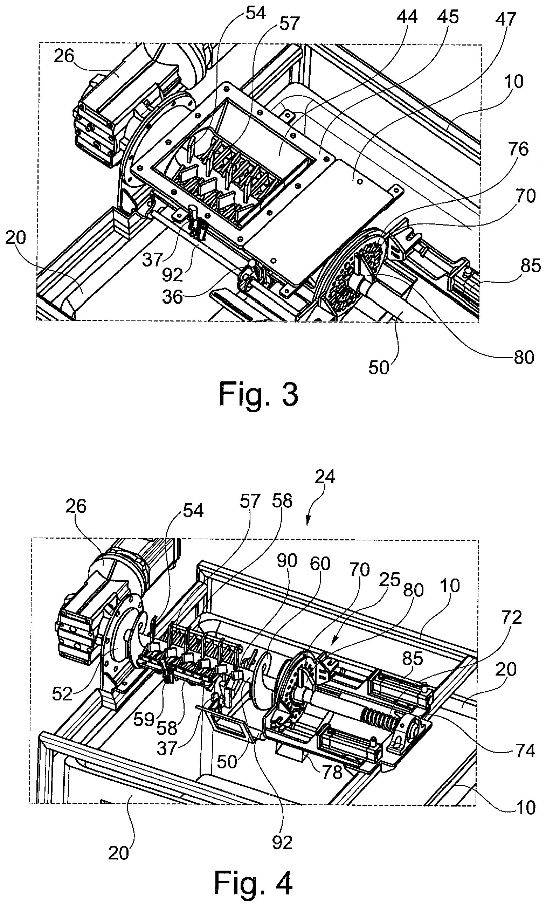

On a représenté sur les figures 1 à 17 un exemple de dispositif de traitement 1, non limitatif, permettant la lacération et la séparation des déchets fermentescibles de déchets non-fermentescibles, comportant un châssis 10 portant un système de traitement des déchets 12 alimenté en déchets par une trémie 14 fermée par une trappe de vide-ordure 16, et une cuve 20 de réception et de stockage des déchets fermentescibles, visible sur les figures 3 et 4.

Un tel dispositif est décrit ci-dessous, mais l'invention n'est pas limitée à ce mode de réalisation et des variantes ou alternatives sont possibles.

Comme cela est visible sur la figure 1, le système de traitement des déchets 12, le châssis 10 et la cuve 20 sont protégés par des panneaux 5 et fermé supérieurement par un capot 8.

Le capot 8 peut comporter une pluralité de plaques 8a à 8c, notamment de grilles, amovibles pour protéger le dispositif tout en permettant l'accès à ce dernier.

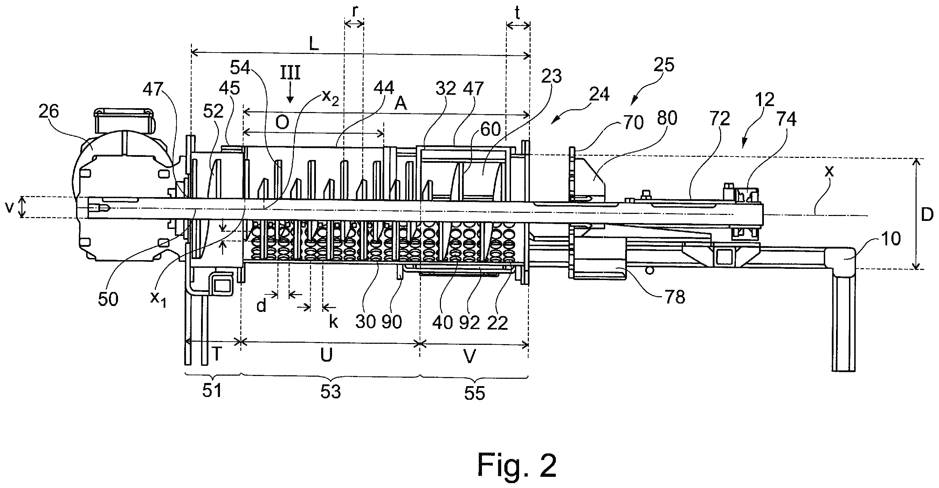

Comme cela est visible sur la figure 2, le système de traitement des déchets 12 comporte un crible 22 de forme générale cylindrique, s'étendant selon un axe longitudinal X, dans lequel est reçu un système de lacération 24 permettant de lacérer les déchets et d'ne amener au moins une partie vers une grille 25.

### Cuve

La cuve 20 est disposée dans le châssis 10 sous le système de traitement des déchets 12.

La cuve 20 est amovible et peut présenter une capacité comprise entre 80 L à 1000 L, par exemple sensiblement entre 500 et 650 L.

La cuve peut être en plastique. La cuve 20 s'étend sur toute la longueur L du crible 22 de sorte que les déchets traversant le crible 22 tombent dans la cuve 20.

Le dispositif peut comporter un groupe froid ou une climatisation non représenté permettant de maintenir la cuve 20 à une température inférieure ou égale à 16°C. [Le dispositif 1 peut comporter un ou plusieurs capteurs de la température, du poids, notamment un peson et/ou du remplissage de la cuve 20.

En variante, la cuve 20 peut être fixe, notamment lorsque le dispositif 1 est au moins partiellement enterré.

### Crible

Le crible 22 s'étend au-dessus de la cuve 20.

Le crible 22, illustré notamment sur les figures 2, 5 et 8 est de forme cylindrique et défini un logement 23 dans lequel est logé le système de lacération 24.

Comme cela est visible sur la figure 2, il présente une dimension verticale D comprise entre 15 et 50 cm, par exemple sensiblement égale à 20 cm et une longueur L comprise entre 20 cm et 150 cm par exemple sensiblement égale à 70 cm

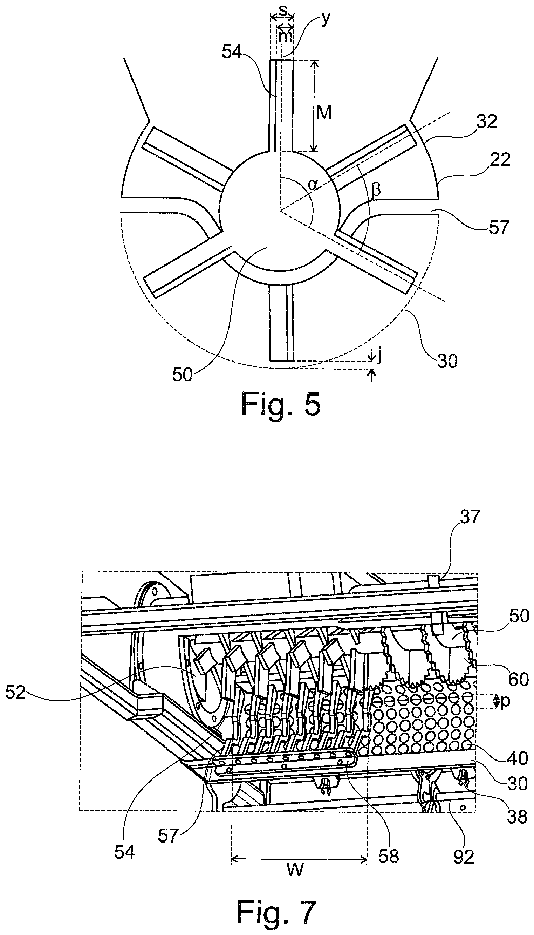

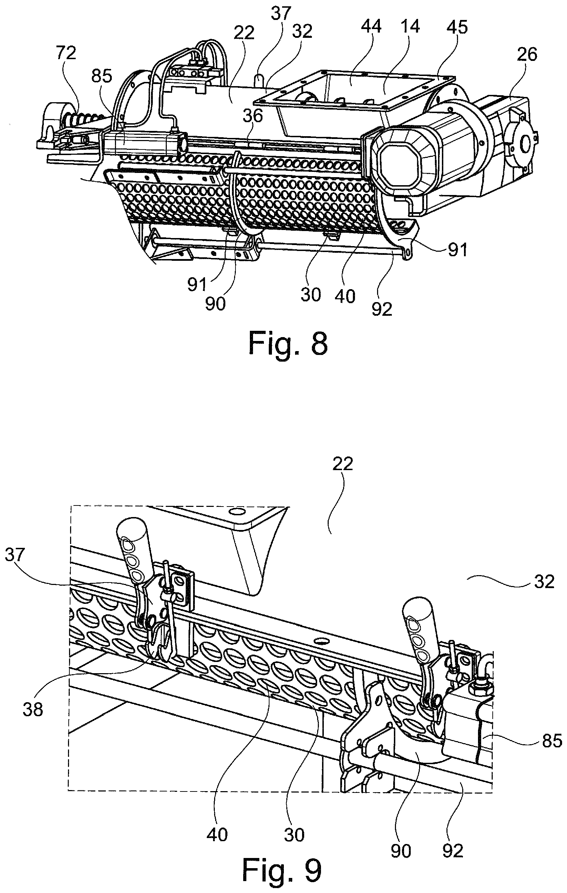

Le crible 22 comporte une auge inférieure 30 reliée à une auge supérieure 32 pas une charnière 36. L'auge inférieure 30 est mobile entre une position fermée, illustrée sur la figure 2, et une position ouverte, illustrée sur les figures 7 et 8. L'auge supérieure 32 porte des sauterelles à crochets 37 coopérant avec des crochets correspondants 38 de l'auge inférieure 30, pour la maintenir en position fermée, comme cela est illustré sur la figure 9.

Le crible 22, notamment l'auge supérieure 32, présente une ouverture 44 par laquelle les déchets sont introduits dans le logement 23 pour être traités. L'ouverture 44 présente une longueur *O* comprise entre 20 cm et 70 cm par exemple sensiblement égale à 40 cm

L'auge supérieure 32 peut présenter sur au moins une partie de sa longueur une forme sensiblement trapézoïdale. Elle peut comporter dans cette partie une bride 45 définissant l'ouverture 44 pour fixer la trémie d'alimentation 14 et une plaque 47 dans le prolongement de la bride 45 permettant définissant un bord de l'auge supérieure 32, comme cela est en particulier visible sur la figure 3.

L'auge inférieure 30 s'étend sur une longueur *A* représentant entre 30 % et 100 %, par exemple sensiblement égale à 95 %, de la longueur *L* du crible 22. Elle s'étend sous l'ouverture 44 jusqu'à l'extrémité distale du crible 22.

L'auge inférieure 30 comporte des orifices 40 alignés en rangées longitudinales sur toute sa surface. Les orifices 40 peuvent êtres espacé périodiquement et de même diamètre et/ou avoir une répartition aléatoire de diamètres différents. Dans la cas d'un espacement périodique, les orifices 40 d'une même rangée sont espacés entre eux d'une distance *k* constante, mesurée entre les centres de ces derniers, par exemple comprise entre 2 et 10 mm Deux rangées adjacentes sont espacées entre elles d'une distance *p*, mesurée entre les axes longitudinaux de deux rangées, comprise entre 2 et 10 mm, par exemple sensiblement égale à 2 mm

Les orifices 40 sont de contour circulaire, mais ils pourraient également être d'une autre forme, notamment de forme ovale, polygonale ou en forme de fente. Ils sont ici tous de même section, mais il pourrait en être autrement.

Les orifices 40 présentent une plus grande dimension *d*, notamment un diamètre, de préférence compris entre 0,5 mm et 30 mm, par exemple sensiblement égal à 20 mm. Le crible 22 peut présenter une zone proximale 45 dépourvue d'orifices. Cette zone proximale 45 s'étend alors en amont de l'ouverture 44.

L'extrémité proximale du crible 22 présente une ouverture 47 de passage d'un arbre 50 du système de lacération 24.

### Système de lacération

Le système de lacération est en particulier visible sur les figures 2 et 4.

L'arbre 50 d'axe longitudinal X présente trois portions consécutives 51, 53 et 55. Lorsque l'arbre 50 est monté sur le crible 22, il passe à travers de l'ouverture 47 du crible 22 pour être couplé au moteur 26 et s'étend au travers d'une grille 70.

L'arbre 50 est relié au travers l'ouverture 47 à un moteur 26 qui l'entraîne en rotation autour de son axe longitudinal X à une vitesse comprise de préférence entre 15 tours/min et 150 tours/min, par exemple sensiblement égale à 30 tours/mn

Dans la portion proximale 51, un premier filet hélicoïdal 52 s'étend de l'arbre 50. Le premier filet 52 s'étend sur une révolution. Le pas du premier filet 52 est compris entre 40 mm et 100 mm, par exemple sensiblement égal à 70 mm La portion proximale 51 présente une longueur T inférieure ou égale à 50 mm, par exemple sensiblement égale à 30 mm. Dans la portion centrale 53, une pluralité de palettes 54 s'étendent de l'arbre 50 et le système de lacération 24 comporte une pluralité d'éléments d'interception, notamment de barres transversales 57, fixes entre lesquelles les palettes 54 passent lors de la rotation de l'arbre 50. La portion centrale 53 s'étend au moins partiellement sous l'ouverture d'alimentation 44, et sur une longueur *U* supérieure ou égale, de préférence supérieure, à la longueur O de l'ouverture 44. La longueur U est comprise entre 200 mm et 700 mm par exemple sensiblement égale à 400 mm.

Les palettes 54 sont regroupées sur l'arbre 50 de telles sorte que plusieurs palettes 54 occupent une même abscisse xᵢ le long de l'axe longitudinal X, ces palettes 54 étant qualifiées de palettes de rang i, i étant un nombre entier. Ainsi, la ou les palettes la ou les plus proximales d'abscisses x₁ sont de rang 1, la ou les palettes d'abscisses consécutives x₂ définissent un rang 2 et ainsi de suite.

Dans l'exemple illustré, chaque rang i de palettes 54 est formé de trois palettes 54 uniformément réparties autour de l'arbre 50 avec angle *α* sensiblement égal à 120° entre elles. Les palettes 54 de rangs respectifs i et i+1 sont décalées entre elles d'un angle *β* sensiblement égal à 60° autour de l'axe X de sorte que les palettes 54 de rang i s'intercalent, en vue de face selon l'axe X, comme cela est illustré sur la figure 5, entre les palettes de rang i+1. Ainsi, les palettes 54 de rangs pairs sont alignées selon l'axe X et les palettes 54 de rangs impairs sont alignées selon ce même axe. La distance r entre les abscisses xᵢ et xᵢ₊₁ des rangs i et i+1 est constante et comprise entre 10 mm et 50 mm par exemple sensiblement égale à 20 mm.

Les palettes 54 présente chacune un axe longitudinal Y perpendiculaire à l'axe longitudinal X.

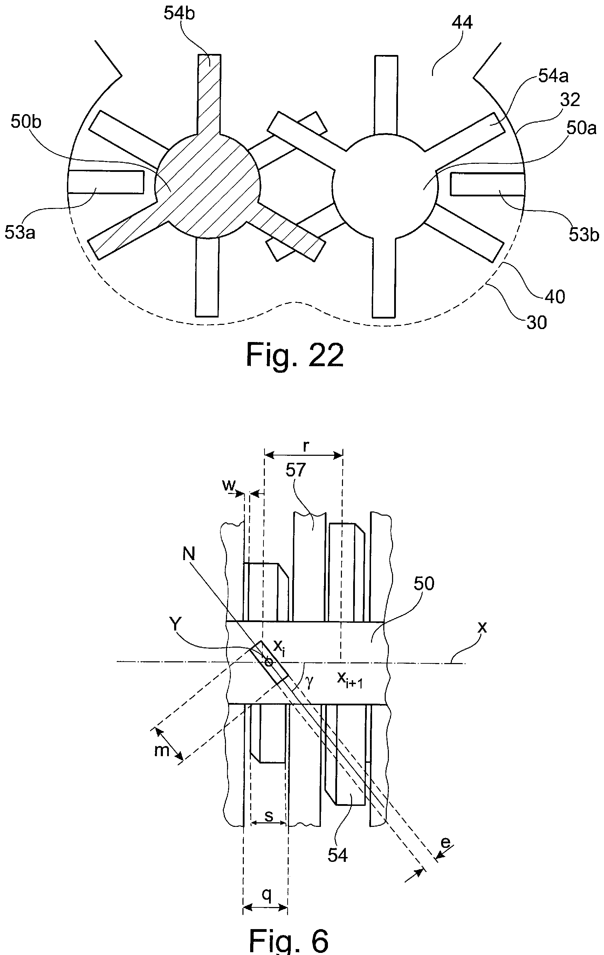

Les palettes 54 sont aplaties selon un plan d'aplatissement N oblique par rapport à l'axe longitudinal X, comme cela est illustré sur la figure 6. Les plans N des palettes forment un angle y avec l'axe longitudinal X compris entre 10° et 80° par exemple sensiblement égal à 30°.

Les palettes 54 présentent toutes une longueur *M*, visible sur la figure 5, comprise entre 70 mm et 210 mm par exemple sensiblement égale à 70 mm

Comme cela est visible sur la figure 6, les palettes 54 présentent toutes une épaisseur *e* comprise entre 2 mm et 15 mm, par exemple sensiblement égale à 4 mm et une largeur *m* comprise entre 10 mm et 60 mm par exemple sensiblement égale à 40 mm.

Les palettes 54 présentent chacune un encombrement axial s compris entre 10 mm et 50 mm, par exemple sensiblement égal à 20 mm

Les barres transversales 57 s'étendent transversalement à l'axe longitudinal de l'arbre 50 entre les palettes 54.

Les barres transversales 57 présente entre elles un espacement d'une largeur selon l'axe longitudinal *q* supérieure ou égale à l'encombrement axial s des palettes de sorte que ces dernières puissent passer entre les barres transversales 57.

L'espacement longitudinal entre chaque palette 54 et la barre transversale 57 en amont ou en aval de cette dernière présente une largeur *w* le long de l'axe longitudinal comprise entre 0,5 mm et 4 mm, mieux entre 0,7 mm et 2 mm, mieux sensiblement égale à 1 mm. L'espacement longitudinal entre une palette 54 et la barre transversale 57 en amont est égale à celui avec la barre transversale 57 en aval.

Les barres transversales 57 peuvent comporter des dents non représentées sur au moins leur partie en regard de l'arbre 50.

Les barres transversales 57 sont reliées entre elles à leurs deux extrémités par des longerons 58, comme cela est illustré sur les figures 4 et 7.

Les barres transversales 57 sont mobiles en rotation autour d'un des longerons 58, comme cela est illustré sur la figure 7, de sorte qu'elles peuvent prendre une position ouverte dans laquelle elles sont désengagées des palettes 54 pour libérer les espaces entre ces dernières et une position fermée dans laquelle elles sont positionnées entre les palettes 54. Les barres transversales 57 sont maintenues en position fermées par un organe de fixation 59, notamment une sauterelle à crochets, permettant de fixer le longeron 58 libre.

Les longerons 58 et les palettes 54 se prolonge au-delà de l'ouverture 44. De préférence, la longueur des longerons 58 est sensiblement égale à la longueur U de la portion centrale 53.

Dans la portion distale 55 consécutive le long de l'axe longitudinal X de la portion centrale 53, l'arbre 50 porte un deuxième filet hélicoïdal 60 présentant entre 1,5 révolution et 2 révolutions. Le pas du deuxième filet 60 est compris entre 40 mm et 150 mm, par exemple sensiblement égal à 70 mm La portion distale 55 présente une longueur V comprise entre 70 mm et 300 mm par exemple sensiblement égale à 150 mm.

Les premier et deuxième filets 52 et 60 et les palettes 54 sont espacés du crible 22 d'une distance *j*, mesurée entre le bord du premier ou deuxième filet 52 et 60 ou des palettes 54 et la surface intérieure du crible 22 inférieure ou égale à 50 mm par exemple sensiblement égale à 15 mm.

Les filets 52 et/ou 60 peuvent être crantés, comme cela est visible sur la figure 7.

En variante non illustré, le système de lacération est dépourvu de la portion proximale, la portion centrale s'étendant à partir de l'extrémité proximale du crible.

### Séparation des erreurs de tri

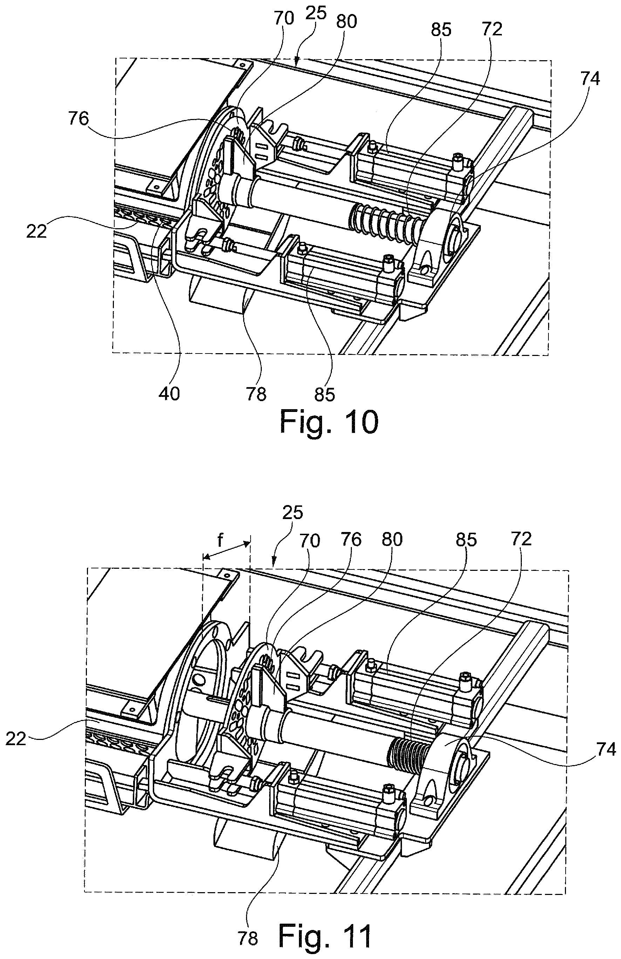

La séparation des déchets 25 est illustrée en détail sur les figures 10 à 12. Elle comporte la grille 70 mobile en translation le long de l'arbre 50 entre une position d'appui contre l'extrémité du crible 22 pour empêcher le passage des déchets solides non fermentescibles, illustré sur la figure 10, et une position écartée de l'extrémité du crible 22 permettant l'évacuation des erreurs de tri, illustré sur la figure 11.

La grille 70 est maintenue plaqué en position d'appui contre l'extrémité du crible 22 par un ressort de rappel 72 monté sur l'arbre 50 entre le clapet 70 et un support 74 permettant de fixer le système de traitement des déchets 12 au châssis 10, comme cela est illustré sur les figures 10 et 11.

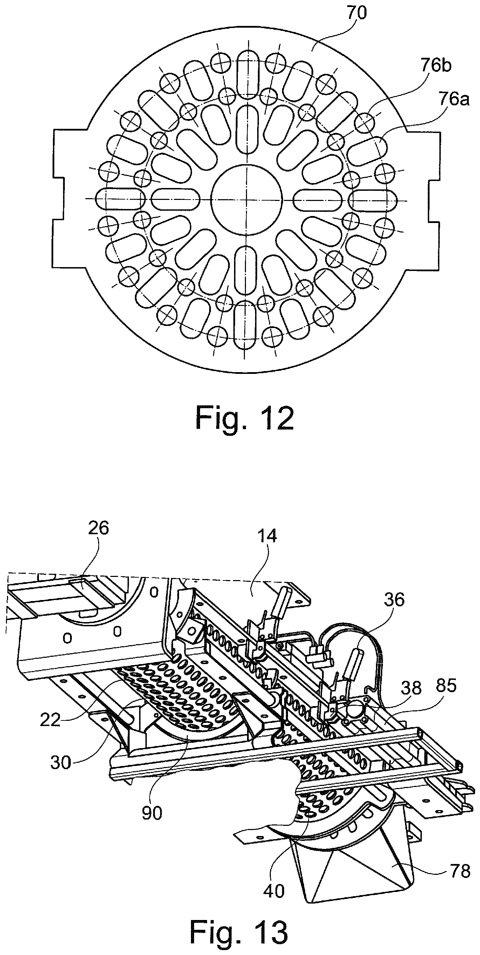

Elle présente des fentes 76 réparties autour de l'arbre 50. Comme cela est illustré sur la figure 12, les fentes 76 peuvent être de formes différentes ; en particulier, la grille 70 peut présenter, comme illustré sur la figure 12, une alternance dans le sens circonférentiel de fentes longues 76a et de fentes courtes 76b.

Dans l'exemple illustré, la grille 70 est plane.

La grille 70 peut passer de la position d'appui à la position écartée lorsque la pression exercée par les déchets sur la grille 70 est supérieure à la force qu'exerce les vérins sur la grille 70 pour le maintenir contre le crible l'écarte d'une distance supérieure à 2 mm. En position écartée, la grille 70 est écarté du crible 22 par exemple d'une distance maximale *f de* 100 mm Une telle position écartée de la grille permet le passage des déchets non fermentescibles vers un récipient non illustré.

Le récipient est disposé au-dessus de la cuve 20 et sous l'espace formé en position écartée de la grille 70. Le récipient est percé de sorte que les éventuels déchets fermentescibles restants peuvent s'écouler vers la cuve 20. Le récipient 84 présente un volume par exemple compris entre 21 et 25 L, par exemple sensiblement égal à 15 L. Le récipient est fixé sur l'auge supérieure 32 du crible 22 ou sur le châssis 10.

De préférence, le récipient est souple pour faciliter son extraction et l'extraction de la cuve.

La grille 70 est également relié à au moins un vérin 85, ici deux vérins 85 permettant de commander le passage en position écartée, notamment au bout d'un nombre prédéterminé d'utilisations du dispositif 1. La grille 70 peut donc également passer en position écartée t revenir en position d'appui par l'action des vérins 85.

Le deuxième filet 60 est espacé de la grille 70 d'une distance t comprise entre 0,5 mm et 20 mm par exemple sensiblement égale à 3 mm

Le dispositif 1 comporte une goulotte 78 de guidage des déchets fermentescibles qui sortent des ouvertures 76 vers la cuve 20 et un organe de raclage 80 en contact ou à faible distance de la grille 70, mobile en rotation par rapport à la grille 70 et en translation avec cette dernière. La goulotte 78 est solidaire de la grille 70. L'organe de raclage 80 permet de racler le côté extérieur de la grille 70 pour récupérer les déchets fermentescibles qui y restent collés. L'organe de raclage 80 est maintenu plaqué contre la grille 70 par le ressort 72 et cela quelle que soit la position de la grille 70.

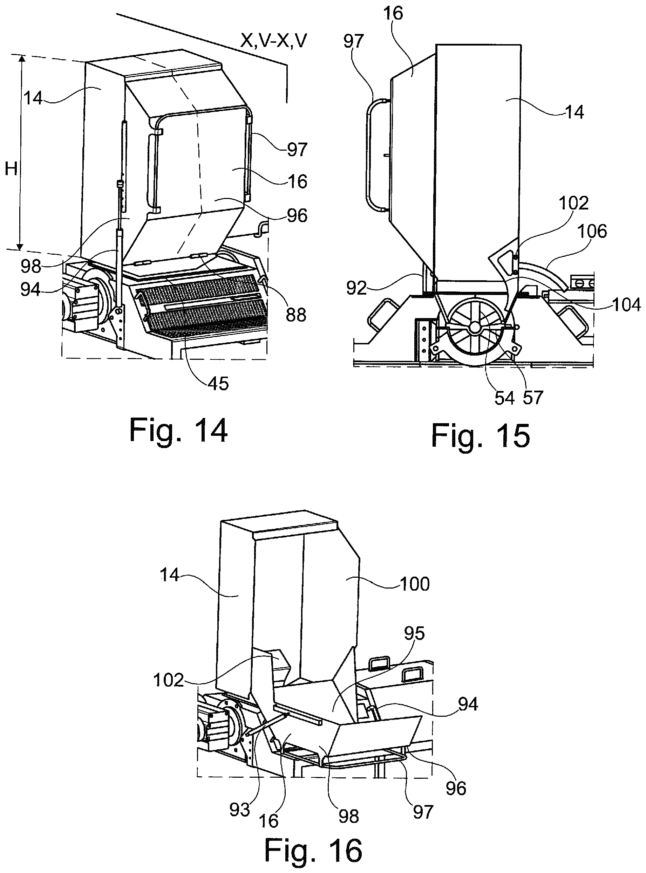

Le crible 22 comporte également un système de raclage 90 extérieur de l'auge inférieure 30. Ce système de raclage 90 comporte deux rails longitudinaux 92 sur lesquels coulisse un racleur comportant deux arceaux 91 épousant la forme du crible 22 et notamment de l'auge inférieure 30, les arceaux 91 étant espacés d'une distance inférieure ou égale à un demi-longueur *A*/2 de l'auge inférieure 30. Il est alors possible, en faisant coulisser le racleur le long des rails longitudinaux 92 d'une position de travail du dispositif, illustrée sur les figures 2 à 4, à une position de repos, illustrée sur la figure 16, de racler la partie extérieure de l'auge inférieure 30 afin de récupérer dans la cuve 20 les déchets fermentescibles restés attachés à l'auge inférieure 30, comme cela est visible sur la figure 8.

Le système de raclage 90 peut être manuel ou motorisé, notamment commandable ou automatique. Par exemple, le dispositif peut être configuré pour que le système de raclage 90 s'actionne régulièrement automatiquement.

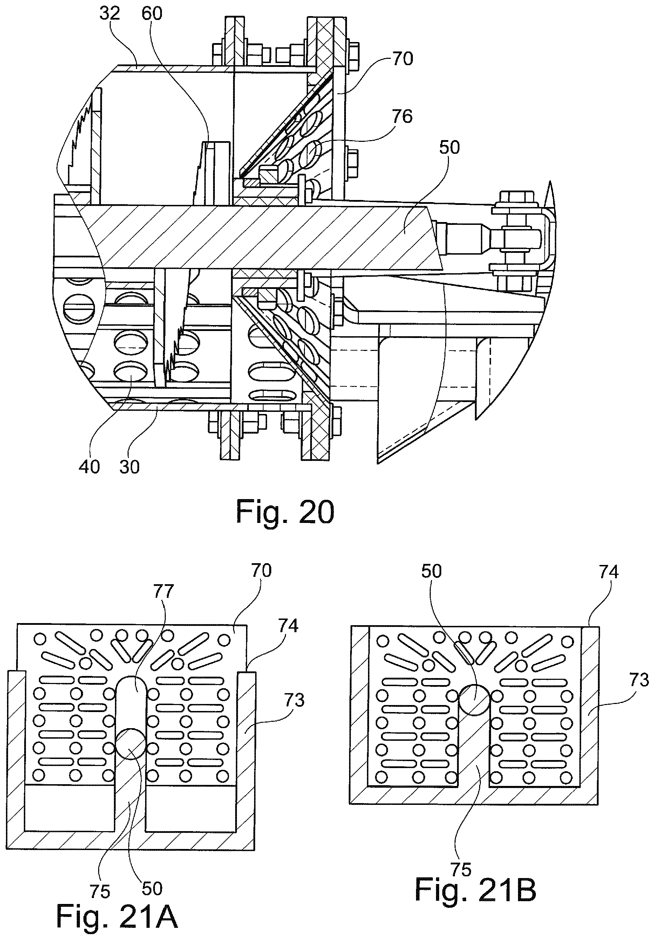

L'exemple de la figure 20 diffère de celui des figures 10 à 12 en ce que la grille 70 est de forme conique, la pointe du cône étant orientée vers l'intérieur du crible en formant un angle *δ* compris entre 20° et 60° avec l'axe longitudinal du crible, par exemple sensiblement égal à 50°.

L'exemple des figures 21A et 21B diffère de celui des figures 10 à 12 en ce que la grille 70 est amovible par coulissement dans un support 73 présentant une gorge 74 dans laquelle les bords de la grille 70 coulissent. Le support 73 présente un doigt de positionnement 75 s'étendant entre le support 73 et l'arbre 50. La grille 70 présente une forme en U, mais il pourrait en être autrement, et comporte une cavité traversante 77 dans laquelle le doigt de positionnement 75 coulisse. Le fait que la gille 70 soit amovible permet de faciliter son nettoyage et le nettoyage du dispositif.

### Trémie d'alimentation

La trémie d'alimentation 14 est en particulier illustrée sur les figures 14 à 17.

Elle s'étend au-dessus de l'ouverture 44 et permet d'alimenter le système de lacération en déchets.

Elle est fixée au crible par l'intermédiaire de la bride 45 du crible 22 s'étendant autour de l'ouverture 44.

De préférence, la trémie 14 présente une hauteur *H* supérieure ou égale à 100 mm

La trappe 16 permet l'alimentation de la trémie 14 en déchets et est mobile d'une position fermée de la trémie 14 sensiblement verticale, illustré sur les figures 14 et 15, à une position ouverte de la trémie 14 sensiblement horizontale, illustré sur la figure 16, par rotation autour d'un axe défini par une charnière 88 de fixation de la trappe 16 sur la trémie 14. La trappe 16 comporte sur sa paroi extérieure des poignées 91 permettant de faciliter la prise de la trappe 16 pendant la fermeture de cette dernière. Elle comporte également un ressort à gaz 93 pour aider l'effort de l'utilisateur lors de la fermeture de la trappe.

La trappe 16 comporte un fond 96 présentant des extrémités distale et proximale inclinées et une paroi latérale 98 pour former une concavité vers la trémie 14. La concavité définie un logement 95 pour recevoir un sac de déchets. La trappe 16 est dépourvue de paroi latérale sur un de ses côtés de sorte à faciliter la mise en place du sac de déchets par ce côté. La trémie 14 comporte une extension 100 formant, en position verticale de la trappe 16 une paroi latérale de cette dernière du côté où elle en est dépourvue.

La trappe 16 passe de la position ouverte à la position fermée par une rotation de 90° autour de la charnière 88

A son extrémité distale, c'est-à-dire son extrémité la plus éloignée de l'ouverture 44, la trappe 16 comporte un crochet 94 de fixation d'un sac de déchets.

La trémie 14 comporte également un organe de poussée 102 pour venir en appui sur les déchets déversés dans le dispositif afin de forcer leur passage dans le système de lacération. L'organe de poussée 102 comporte une plaque de pression 104 de forme incurvée et peut venir prendre une position d'appui dans laquelle il se positionne au-dessus des palettes 54 et une position de libération dans laquelle il se plaque contre la paroi de fond de la trémie 14, comme cela est illustré sur la figure 15.

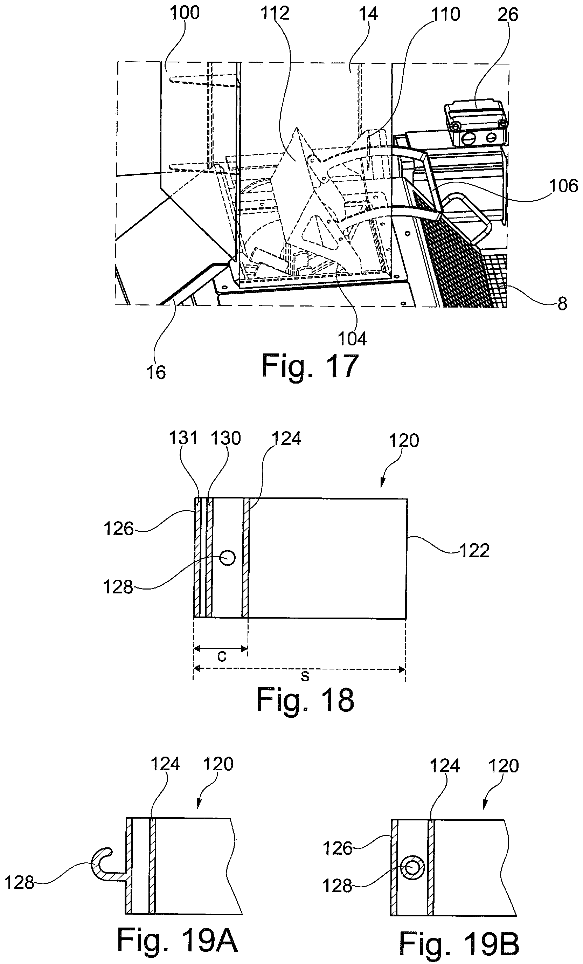

L'organe de poussée 102 comporte une extension 106 s'étendant hors de la trémie pour permettre de passer manuellement l'organe de poussée 102 en position d'appui. L'extension peut être une poignée arrière 106, comme cela est illustré en figure 17. En variant, l'extension est un bandit manchot s'étendant en latéral de la trémie 14. L'organe de poussée 102 comporte une plaque de guidage 112 sensiblement perpendiculaire à la plaque de pression 104 et reliée à cette dernière à son extrémité distale. Elle s'étend de sorte à venir en appui contre la trémie 14 par son extrémité libre lorsque l'organe de poussée 102 est en position de libération. Elle permet notamment d'empêcher les déchets de passer derrière la plaque de poussée, ce qui les empêche de rentrer dans le système de lacération. L'extrémité distale de la plaque de guidage 112 peut être reliée à un nappe souple non illustré sur toute la largeur de la trémie reliée à son autre extrémité à la paroi de la trémie de sorte que lorsque l'organe de poussée 102 est en position de libération, la nappe est repliée contre la paroi de la trémie et en position d'appui, la nappe est tendue entre la paroi de la trémie et l'extrémité de la plaque de guidage.

L'organe de poussée 102 peut assurer une poussée équivalente à un poids compris entre 1 et 10 kg s'exerçant sur les déchets par exemple sensiblement égal à 5 kg La distance entre l'organe de poussée 102 en position de fermeture du dispositif et l'extrémité des palettes est par exemple comprise entre 0,5 mm et 50 mm.

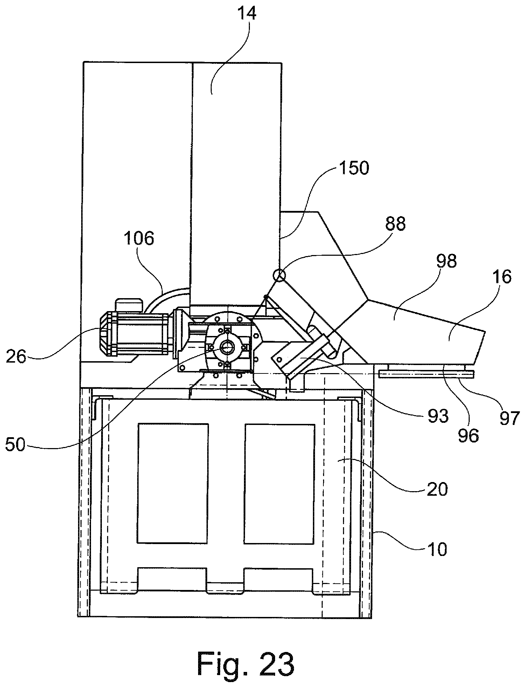

En variante illustré sur la figure 23, la trappe 16 comporte un fond 96 présentant une extrémité distale inclinée et une paroi latérale 98 pour former une concavité vers la trémie 14. La trappe 16 passe de la position ouverte à la position fermée par une rotation autour de la charnière 88 d'environ 105°. La trappe 16 comporte une plaque de protection 150 pour limiter l'accès au système de lacération. Dans la variante illustrée, la plaque de protection est en position verticale lorsque la trappe 16 est en position ouverte.

### Sac

Un sac 120 adapté à être utilisé avec la trémie 14 décrit ci-dessus est illustré sur la figure 18.

Le sac 120 comporte une première extrémité 122 définissant une ouverture par laquelle les déchets sont introduits dans le sac 120 et une soudure de fond de sac 124 formant un bord inférieur fermé bloquant les déchets dans le sac 120 pour les empêcher de ressortir par une seconde extrémité 126 opposé à la première extrémité 122.

La soudure de fond 124 est espacée de la seconde extrémité 126 d'une distance c comprise entre 0,5 cm et 20 cm, par exemple sensiblement égale à 5 cm.

Dans l'espace entre la soudure de fond 124 et la seconde extrémité 126, le sac 120 comporte un organe d'accrochage 128 sous forme d'un trou ou d'une fente de préférence dans le sens de la largeur. L'organe d'accrochage 128 permet de fixer le sac par le fond sur le crochet constituant l'organe de fixation 94 de la trappe.

Le sac 120 présente une longueur totale S supérieure 30 cm et une contenance comprise entre 40 et 120 L, mieux entre 50 L et 80 L.

Dans l'exemple illustré sur la figure 18, le sac 120 comporte également deux soudures additionnelles 130 et 131 permettant de renforcer le fond du sac 120 pour l'empêcher de se déchirer sous le poids des déchets notamment lorsqu'il est pendu au crochet 94.

Un tel sac 120 peut être stocké dans un rouleau comportant une pluralité de sacs 120 du même type, la seconde extrémité 126 du sac 120 étant attaché par une prédécoupe à la première extrémité 122 du sac 120 suivant. Ainsi, les sacs 120 sont stockés de manière compacte et l'utilisateur n'a plus qu'à déchirer le sac 120 selon la prédécoupe pour l'utiliser.

En variante illustrée sur la figure 19a, l'organe d'accrochage 128 est un crochet à la seconde extrémité 126. Le crochet 128 est formé d'un pièce plastique s'étendant sur toute la largeur su sac 120. Ainsi, le poids des déchets se réparti sur toute la longueur de ce dernier, ce qui permet d'empêcher qu'il ne se déchire.

En variante illustré sur la figure 19B, l'organe d'accrochage 128 est un trou renforcé par une soudure circulaire, par un œillet plastique ou métallique.

### Procédé de traitement des déchets

Le procédé de traitement des déchets à l'aide du dispositif décrit précédemment est détaillé ci-dessous.

Dans le cas où l'utilisateur possède un dispositif 1 tel que décrit précédemment dans ses locaux, le procédé peut être le suivant.

L'utilisateur remplit un sac 120 de déchets préalablement triés, par exemple les restes de repas ou les déchets de préparation culinaire. L'utilisateur doit éviter de mettre notamment des os trop gros, des couverts métalliques et des sacs plastiques ou des films cellophane dans le sac 120 afin de ne pas bloquer le dispositif. Lorsqu'il estime que le sac 120 est plein ou de façon périodique, l'utilisateur traite les déchets contenus dans le sac à l'aide du dispositif selon l'invention.

Pour cela, il ouvre la trémie 14 en passant la trappe 16 en position horizontale et pose son sac de déchet ouvert dans le logement 95 sur la trappe 16 par le côté dépourvu de bord latéral en positionnant l'ouverture 122 du sac 120 vers la trémie 14 et le fond du sac vers l'extérieur. Il fixe l'organe d'accrochage 128 du sac 120 sur l'organe de fixation 94 de la trappe 16.

L'utilisateur referme ensuite la trappe 16 en la passant en position verticale. Lorsque la trappe 16 est fermée d'un angle supérieur à 20° par rapport à l'horizontale, l'organe de poussée 102 passe en position de libération pour permettre le passage des déchets dans le système de broyage 12. Ainsi, les déchets contenus dans le sac 120 se déversent par l'ouverture 122 dans le système de broyage 12 alors que le sac 120 reste accroché à l'organe de fixation 94. Si le sac 120 venait à tomber dans le système de broyage 12, il risquerait de s'enrouler sur l'arbre 50, ce qui obligerait au bout d'un certain nombre de sac une opération de maintenance tel que décrit plus loin.

L'utilisateur peut passer l'organe de poussée 102 en position d'appui manuellement à l'aide de l'extension 106. Ainsi, si des déchets légers, tels que du pain ou de la salade, ont du mal à entrer dans le système de lacération 24, l'utilisateur peut par l'intermédiaire de l'organe de poussée 102, exercer une poussée contre eux pour les forcer à entrer dans le système de lacération 24.

Les déchets sont alors entraînés par les palettes 54 qui les lacèrent en les faisant passer entre les barres transversales 57 au moins une fois. Simultanément à la lacération, les palettes 54, de par leur inclinaison par rapport à l'axe longitudinal X, déplacent les déchets dans le sens longitudinal vers la grille 70. Les déchets qui tombent dans la portion proximale 51 sont ramenés dans la portion centrale 53 par le filet proximal 52.

Au moins une partie des déchets fermentescibles tels que les fruits, légumes ou le pain sont facilement déchiquetés en morceaux d'une taille suffisamment petite pour passer entre les orifices 40 du crible 22. Une partie des déchets fermentescibles qui ne sont pas passés dans les orifices 40 après un passage entre les barres transversales 57 peut être entraînée par les palettes 54 pour effectuer un deuxième passage entre les barres transversales 57 dans le sens inverse et ainsi de suite jusqu'à avoir une taille suffisamment petite pour passer dans les orifices 40 ou jusqu'à être entrainé par les palettes 54 hors de la zone longitudinale dans laquelle s'étendent les barres transversales 57. Les déchets non fermentescibles souples et déformables tels que emballages s'aplatissent et s'écrasent contre le crible 22 sans se déchiqueter et ne peuvent pas passer dans les orifices 40. Les déchets non fermentescibles durs tels que les petits os très rigides sont cassés en gros morceaux qui ne passent pas dans les orifices 40. Les déchets non fermentescibles fragiles tels que les petits os fragiles, par exemple les os de poulet, sont lacérés en petits morceaux qui passent dans les orifices 40. Il se retrouve dans la pulpe, sans pour autant avoir un impact sur la valorisation de la pulpe. Ainsi, au moins une partie des déchets fermentescibles tombent dans la cuve 20 en passant au travers des orifices 40 du crible 22, et les déchets restants dans le crible 22, c'est-à-dire les déchets fermentescibles restants et les déchets non fermentescibles ne passent pas au travers des orifices et sont entraînés par les palettes 54 puis le filet 60 vers la grille 70.

Le filet 60 brasse les déchets restants de sorte que les déchets fermentescibles lacérés suffisamment pour passer dans les orifices 40 puissent encore passer par ces derniers.

Les déchets restants s'accumulent contre la grille 70 et viennent se presser contre cette dernière sous l'effet de la rotation du filet 60. La pression exercée permet de faire encore passer une partie des déchets fermentescibles restants au travers des ouvertures 76 de la grille 70 jusque dans la cuve 20 par l'intermédiaire de la goulotte 78.

La grille 70 peut être configurée pour passer en position écartée au bout d'un certain nombre d'utilisation du dispositif prédéterminé, par exemple après 4 ou 5 cycles, ou lorsque la pression sur la grille 70 dépasse un seuil prédéterminé, c'est-à-dire lorsque la grille 70 s'espace du crible 22 d'une distance supérieure ou égale à 2 mm sous la pression des déchets. Le passage en position écartée s'effectue par l'actionnement du ou des vérins 85 qui écarte la grille 70 de l'extrémité distale du crible 22 pour laisser un passage permettant que les déchets non traités tombent dans le récipient 84.

Lorsque la grille 70 passe en position écartée, le moteur 26 peut entraîner l'arbre 50 en rotation inverse sur quelques rotations, par exemple une ou deux rotations, pour racler la paroi interne de la grille 70 et faciliter l'évacuation des déchets.

Ainsi, une grande partie des déchets fermentescibles sont stockés dans un état lacérés dans la cuve 20 et le reste des déchets est reçu dans le récipient 84. Le récipient 84 étant amovible et d'une petite contenance peut être vidé régulièrement dans une poubelle classique.

Lorsque la cuve 20 est pleine à plus de 75%, le dispositif émet un signal vers une centrale de contrôle qui déclenche une procédure de d'enlèvement et de remplacement de la cuve 20 dans les jours qui suivent. En variante, la procédure de contrôle et de récupération peut être programmé de manière périodique indépendamment du remplissage de la cuve. Ceci est particulièrement utile dans le cas d'un producteur de déchets générant une quantité sensiblement constante de déchets fermentescibles. Dans ce cas, le dispositif peut ou non prévenir l'utilisateur lorsque la cuve 20 est pleine à plus de 75% pour lui signaler qu'il va devoir la changer par une autre cuve 20 vide, notamment par une cuve 20 vide qu'il possède en stock.

Lors du changement de cuve, l'ouverture de la porte d'accès à la cuve la machine se met en sécurité, le moteur et les vérins sont immobilisés l'opérateur actionne préférentiellement l'organe de raclage 80 d'extrémité et le système de raclage 90 de l'auge inférieure 30 puis remet ce dernier en position de repos pour faciliter l'extraction et le vidage du récipient 84. La cuve 20 est alors retirée du dispositif, la housse contenant la pulpe à l'intérieur de la cuve 20 est fermée un collier et la cuve 20 est fermée par un couvercle cerclé pour son enlèvement. Dans le dispositif elle est remplacée par une cuve vide.

Il peut également être prévu un système de contrôle de la température de la cuve qui envoie un signal vers la centrale de contrôle lorsque la température de la cuve dépasse une valeur seuil, par exemple égale à 16°C. Ceci permet d'alerter d'un problème sur le contrôle de la température de la cuve et de permettre de prendre les mesures adéquates, comme la manutention du dispositif et/ou l'enlèvement de la cuve pour des raisons d'hygiène.

Lorsque le dispositif 1 se bloque, il est prévu que l'utilisateur puisse de lui-même le débloquer facilement sans avoir à faire appel à un opérateur agent de maintenance Le dispositif peut notamment se bloquer lorsque des os trop gros, des couverts métalliques ou des sacs plastiques sont introduits avec les déchets. Pour ce faire, l'utilisateur doit mettre la machine à l'arrêt puis il dévisse le panneaux 8b de la machine et ouvre les sauterelles à crochet 37 pour ouvrir l'auge inférieure 30 du crible 22. L'utilisateur ouvre ensuite l'organe de fixation 59 maintenant les barres transversales 57 en position fermée pour basculer ces dernières et libérer les palettes 54. Il peut alors retirer l'élément bloquant avant de tout refermer et remettre la machine en marche.

Il est préférentiellement prévu un système arrêtant automatiquement le moteur 26 et les mouvements de la grille dès que l'un des panneaux démontables 8, 8a, 8b est ouvert ou démonté, ceci afin de sécuriser encore l'appareil.

Pour le nettoyage du dispositif, l'utilisateur peut incorporer dans la trappe vide sac des sacs de copeaux de bois. Ces derniers vont frotter contre les parois et passer dans les orifices du crible entraînant avec eux les déchets restants. Pour nettoyer le dispositif, il est également possible d'ouvrir le crible 22 et/ou les barres transversales 57 de la même manière que lorsque le dispositif se bloque.

Le dispositif peut comporter une pluralité d'appareils de mesure permettant de mesurer, entre autres, le poids de la cuve, le poids des sacs disposé sur la trappe, l'identification de la couleur des sacs, la température de la cuve ou le niveau de remplissage de la cuve, la référence d'un élément d'identification de la cuve, notamment une puce NFC ou RFID. De tels capteurs peuvent communiquer avec l'utilisateur et/ou la centrale pour fournir des données d'utilisations et/ou prévenir de tout problème ou de toute opération de maintenance nécessaire.

Les déchets peuvent passer au préalable sous un aimant afin de séparer les déchets métalliques des déchets fermentescibles. Ceci peut permettre d'être sûr qu'aucun couvert n'est resté dans les déchets. Un tel aimant peut être prévu directement dans le dispositif par exemple dans la trémie 14 et sur la trappe vide sac.

Un tel dispositif peut permettre d'anticiper le moment où il va falloir récupérer une ou plusieurs cuves 20 et de pouvoir prévenir l'entreprise de valorisation en avance que tel jour elle recevra tant de déchets fermentescibles de tel type. Ainsi, l'entreprise de valorisation peut s'organiser en fonction. Par exemple, elle organise, le même jour, l'approvisionnement de déchets fermentescibles complémentaires par d'autres biais pour pouvoir former une pulpe énergétique à fort rendement. Par exemple, les déchets de cuisine étant à fort potentiel méthanogène, elle peut prévoir par exemple de les compléter avec des déchets ayant un potentiel méthanogène plus faible pour obtenir un potentiel méthanogène moyen.

En variante, le dispositif n'est pas directement chez le producteur de déchets mais à un point de rassemblement des déchets. Dans ce cas, la procédure est la même sauf que le procédé comporte une étape préalable additionnel consistant à récupérer les sacs de déchets chez le producteur pour les amener dans le point de rassemblement où ils sont traités. Le point de rassemblement peut être directement dans l'entreprise de valorisation des déchets fermentescibles ou dans un lieu autre, par exemple central relativement aux différents producteurs de déchets. Ceci permet notamment de pouvoir traiter des déchets fermentescibles de producteurs produisant des quantités de déchets relativement faible. Afin de réduire les coûts liés au transport, il est possible de lacérer préalablement les déchets, par exemple à l'aide d'un équipement uniquement muni du dispositif de lacération chez le producteur de déchets et de transporter les déchets lacérés et donc plus compacts, au point de rassemblement. Le dispositif au point de rassemblement peut, dans ce cas, être plus simple que celui décrit précédemment. Il peut notamment ne pas comporter la portion centrale 53 du système de lacération 24 avec les palettes 54 et les barres transversales 57 mais comporter un arbre comportant un filet permettant de brasser et transporter les déchets vers la grille 70. En variante encore, le dispositif peut être partiellement enterré et comporter un système de d'évacuation automatique permettant notamment de débloquer le système de lacération. Un tel système de d'évacuation peut comporter un système de basculement automatique des barres transversales pour libérer les palettes et un peigne racleur présentant une pluralité de doigts destinés à s'engager entre les palettes pour libérer ces dernières de l'élément bloquant, l'élément bloquant étant récupéré dans un réservoir spécifique. Ce système permet de remettre le dispositif en fonctionnement automatiquement.

En variante illustré sur la figure 22, le système de lacération 12 comporte deux arbres 50a et 50b portant des palettes 54a et 54b telles que décrit précédemment. Les palettes 54a sont intercalées le long de l'axe longitudinal de l'arbre 50 avec les palettes 54b. Les arbres 50a et 50b sont entraînés dans des sens opposées. Ainsi, lors de la rotation des arbres 50a et 50b, les palettes 54a évoluent entre les palettes 54b et réciproquement. Les déchets sont lacérés dans la partie centrale entre les palettes 54a et 54b. De la même manière les filets 52a et 52b et 60a et 60b respectivement sont imbriquées. Le crible 22 est alors de forme cylindrique à base en forme de huit, le grand axe du huit étant dans un plan horizontal et la grille 70 peut être sensiblement également en forme de 8. Le système de lacération peut également comporter des éléments fixes 53a et 53b s'étendant de part et d'autre de l'ensemble formé par les deux arbres 50a et 50b et les palettes 54a et 54b. Les éléments fixes 53a s'étendant du côté de l'arbre 50a s'intercalent le long de l'axe longitudinale de l'arbre 50a entre les palettes 50a et les éléments fixes 53b s'étendant du côté de l'arbre 50b s'intercalent le long de l'axe longitudinale de l'arbre 50b entre les palettes 50b.

## Revendications

1. Dispositif de traitement de déchets (1) permettant de densifier et séparer des déchets fermentescibles d'autres déchets non-fermentescibles, ce dispositif (1) comportant :
- un crible (22) sur lequel sont amenés les déchets, le crible (22) s'étendant selon un axe longitudinal (X) et présentant une pluralité d'orifices (40) sur au moins une partie de sa longueur *L*,
- un système de lacération (24) s'étendant au moins partiellement au-dessus du crible (22), le système de lacération (24) comportant :
• un arbre rotatif (50 ; 50a) s'étendant selon un axe longitudinal (X),
• une pluralité d'éléments d'interception (57 ; 54b, 53a, 53b),
• une pluralité de palettes (54 ; 54a) portés par l'arbre (50 ; 50a), s'étendant transversalement à l'arbre (50 ; 50a) et évoluant entre les éléments d'interception (57 ; 54b, 53a, 53b) lors de la rotation de l'arbre (50 ; 50a), les palettes (54) s'étendant obliquement par rapport à l'axe longitudinal (X) de l'arbre (50 ; 50a) de façon à, lors de la rotation de l'arbre (50 ; 50a), déplacer les déchets le long du crible (22) vers une grille (25), et permettre à au moins une partie des déchets fermentescibles lacérés entre les palettes (54 ; 54a) et les éléments d'interception (57 ; 54b, 53a, 53b) de passer au travers des orifices (40) du crible (22),
- une cuve (20) de réception et de stockage des déchets fermentescibles ayant traversé les orifices (40) du crible (22).

2. Dispositif selon la revendication 1, le crible (22) comportant, sur au moins une partie de sa longueur L, une auge inférieure (30) et une auge supérieure (32) mobiles entre elles entre une position ouverte et une position fermée.

3. Dispositif selon l'une quelconque des revendications précédentes, chaque orifice (40) du crible (22) présentant une section inférieure ou égale à 5 cm², mieux inférieure ou égale à 3 cm².

4. Dispositif selon l'une quelconque des revendications précédentes, les palettes (54 ; 54a) présentant chacune un axe longitudinal (Y) perpendiculaire à l'axe longitudinal (X) de l'arbre (50 ; 50a).

5. Dispositif selon l'une quelconque des revendications précédentes, les éléments d'interception (57 ; 54b, 53a, 53b) formant entre eux des espaces dans lesquelles les palettes (54 ; 54a) passent lorsque l'arbre (50 ; 50a) est en rotation, l'encombrement axial de chaque palette (54 ; 54a) étant notamment inférieur à l'écartement entre les éléments d'interception d'une différence comprise de préférence entre 8 mm et 1 mm, mieux entre 1,5 mm et 3 mm..

6. Dispositif selon l'une quelconque des revendications précédentes, le système de lacération (24) comportant une portion centrale (53) dans laquelle l'arbre (50 ; 50a) porte les palettes (54 ; 54a) et une portion distale (55) dans laquelle l'arbre (50 ; 50a) porte un filet distal hélicoïdal (60) orienté de façon à déplacer les déchets vers la grille (25), les déchets se déplaçant de la portion centrale (53) vers la portion distale (55).

7. Dispositif selon l'une quelconque des revendications précédentes, les éléments d'interception (57 ; 54b, 53a, 53b) étant des éléments statiques transversaux (57 ; 53a, 53b) formant un râtelier entre lesquels les palettes (54 ; 54a) évoluent lors de la rotation de l'arbre (50 ; 50a) ou des éléments mobiles, notamment des palettes complémentaires (54b) portés par un arbre complémentaire (50b) s'étendant parallèlement à l'arbre (50a) et entraîné en rotation, la rotation de l'arbre complémentaire (54b) étant différente de celle de l'arbre, notamment de sens opposé.

8. Dispositif selon l'une quelconque des revendications précédentes, la séparation des erreurs de tri (25) comportant une grille (70) pouvant passer d'une position d'appui contre l'extrémité distale du crible (22) empêchant le passage des erreurs de tri, à une position écartée du crible (22) permettant le passage des déchets.

9. Dispositif selon l'une quelconque des revendications précédentes, comportant une trémie d'alimentation (14) en déchets alimentant le système de lacération (24) des déchets, la trémie d'alimentation (14) comportant une trappe de vide-sac (16) configuré pour pouvoir passer d'une configuration fermée de fermeture de la trémie d'alimentation à une position ouverte sensiblement horizontale de la trémie (14) et pour recevoir un sac (120) de déchets en position ouverte.

10. Procédé de traitement de déchets pour densifier et séparer des déchets fermentescibles d'autres déchets non fermentescibles à l'aide du dispositif (1) selon l'une quelconque des revendications précédentes.

## Patentansprüche

1. Abfallverarbeitungsvorrichtung (1), die es ermöglicht, vergärbare Abfälle zu verdichten und von anderen nicht vergärbaren Abfällen zu trennen, wobei diese Vorrichtung (1) umfasst:
- ein Sieb (22), auf das die Abfälle geführt werden, wobei sich das Sieb (22) entlang einer Längsachse (X) erstreckt und eine Mehrzahl von Öffnungen (40) über zumindest einen Teil seiner Länge L aufweist,
- ein Shreddersystem (24), das sich zumindest teilweise oberhalb des Siebs (22) erstreckt, wobei das Shreddersystem (24) umfasst:
• eine drehende Welle (50; 50a), die sich entlang einer Längsachse(X) erstreckt,
• eine Mehrzahl von Fangelementen (57; 54b, 53a, 53b),
• eine Mehrzahl von Flügeln (54; 54a), die von der Welle getragen werden (50; 50a), sich quer zur Welle (50; 50a) erstrecken und sich beim Drehen der Welle (50; 50a) zwischen den Fangelementen (57; 54b, 53a, 53b) bewegen, wobei sich die Flügel (54) schräg zur Längsachse (X) der Welle (50; 50a) so erstrecken, dass die Abfälle beim Drehen der Welle (50; 50a) entlang des Siebes (22) zu einem Gitter (25) bewegt werden und es zumindest einem Teil der zwischen den Flügeln (54; 54a) und den Fangelementen (57; 54b, 53a, 53b) geshredderten vergärbaren Abfälle ermöglicht wird, durch Öffnungen (40) des Siebes (22) durchzugehen,
- einen Behälter (20) zur Aufnahme und Lagerung der vergärbaren Abfälle, welche die Öffnungen (40) des Siebes (22) durchquert haben.

2. Vorrichtung nach Anspruch 1, wobei das Sieb (22) über zumindest einen Teil seiner Länge L einen unteren Korb (30) und einen oberen Korb (32) umfasst, die untereinander zwischen einer geöffneten Position und einer geschlossenen Position beweglich sind.

3. Vorrichtung nach einem der vorhergehenden Ansprüche, wobei jede Öffnung (40) des Siebs (22) einen Querschnitt von 5 cm² oder weniger, besser 3 cm² oder weniger aufweist.

4. Vorrichtung nach einem der vorhergehenden Ansprüche, wobei die Flügel (54; 54a) jeweils eine Längsachse (Y) aufweisen, die senkrecht zur Längsachse (X) der Welle (50; 50a) verläuft.

5. Vorrichtung nach einem der vorhergehenden Ansprüche, wobei die Fangelemente (57; 54b, 53a, 53b) zwischen sich Räume bilden, in denen beim Drehen der Welle (50; 50a) die Flügel (54; 54a) laufen, wobei das axiale Maß jedes Flügels (54; 54a) insbesondere um bevorzugt 8 mm bis 1 mm, besser 1,5 mm bis 3 mm kleiner als der Abstand zwischen den Fangelementen ist.

6. Vorrichtung nach einem der vorhergehenden Ansprüche, wobei das Shredder-System (24) einen zentralen Abschnitt (53) umfasst, in dem die Welle (50; 50a) die Flügel (54; 54a) trägt, und einen distalen Abschnitt (55), in dem die Welle (50; 50a) eine distale Schnecke (60) trägt, die so ausgerichtet ist, dass die Abfälle zum Gitter (25) bewegt werden, wobei sich die Abfälle vom zentralen Abschnitt (53) zum distalen Abschnitt (55) bewegen.

7. Vorrichtung nach einem der vorhergehenden Ansprüche, wobei die Fangelemente (57; 54b, 53a, 53b) feststehende Querelemente (57; 53a, 53b) sind, die einen Rechen bilden, zwischen denen sich beim Drehen der Welle (50; 50a) die Flügel (54; 54a) fortbewegen, oder bewegliche Elemente, insbesondere zusätzliche Flügel (54b), die von einer zusätzlichen Welle (50b) getragen werden, die sich parallel zu der Welle (50a) erstreckt und drehangetrieben wird, wobei die Drehung der zusätzlichen Welle (54b) verschieden von derjenigen der Welle ist, insbesondere gegenläufig.

8. Vorrichtung nach einem der vorhergehenden Ansprüche, wobei die Trennung der Falschsortierungen (25) ein Gitter (70) umfasst, das aus einer Anlageposition am distalen Ende des Siebs (22), die den Durchgang der Falschsortierungen verhindert, in eine vom Sieb (22) beabstandete Position übergehen kann, die den Durchgang der Abfälle ermöglicht.

9. Vorrichtung nach einem der vorhergehenden Ansprüche, umfassend einen Abfallaufgabebunker (14), der dem Shreddersystem (24) Abfälle zuführt, wobei der Aufgabebunker (14) eine Sackentleerklappe (16) umfasst, die dazu ausgestaltet ist, aus einer geschlossenen Stellung zum Verschließen des Aufgabebunkers in eine im Wesentlichen waagerechte geöffnete Position des Bunkers (14) übergehen zu können und in der geöffneten Position einen Sack (120) mit Abfällen aufzunehmen.

10. Abfallverarbeitungsverfahren zum Verdichten und zum Trennen der vergärbaren Abfälle von anderen nicht vergärbaren Abfällen mithilfe einer Vorrichtung (1) nach einem der vorhergehenden Ansprüche.

## Claims

1. Waste processing device (1) allowing fermentable waste to be densified and separated from other, non-fermentable, waste, this device (1) comprising:
- a screen (22) onto which the waste is conveyed, the screen (22) extending along a longitudinal axis (X) and having a plurality of orifices (40) over at least part of its length L,
- a laceration system (24) extending at least partially above the screen (22), the laceration system (24) comprising:
• a rotary shaft (50; 50a) extending along a longitudinal axis (X),
• a plurality of interception elements (57; 54b, 53a, 53b),
• a plurality of blades (54; 54a) borne by the shaft (50; 50a), extending transversely to the shaft (50; 50a) and moving between the interception elements (57; 54b, 53a, 53b) as the shaft (50; 50a) rotates, the blades (54) extending obliquely with respect to the longitudinal axis (X) of the shaft (50; 50a) so that as the shaft (50; 50a) rotates, the waste is moved along the screen (22) towards a grating (25) and so as to allow at least part of the fermentable waste which has been lacerated between the blades (54; 54a) and the interception elements (57; 54b, 53a, 53b) to pass through the orifices (40) of the screen (22),
- a vat (20) for receiving and storing fermentable waste that has passed through the orifices (40) of the screen (22).

2. Device according to Claim 1, the screen (22) comprising, over at least part of its length *L,* a lower trough (30) and an upper trough (32) which are able to move relative to one another between an open position and a closed position.

3. Device according to either one of the preceding claims, each orifice (40) of the screen (22) having a cross section less than or equal to 5 cm², better still, less than or equal to 3 cm².

4. Device according to any one of the preceding claims, the blades (54; 54a) each having a longitudinal axis (Y) perpendicular to the longitudinal axis (X) of the shaft (50; 50a).

5. Device according to any one of the preceding claims, the interception elements (57; 54b, 53a, 53b) forming between them spaces through which the blades (54; 54a) pass when the shaft (50; 50a) is rotating, the axial bulk of each blade (54; 54a) being notably smaller than the separation between the interception elements by a difference comprised preferably between 8 mm and 1 mm, better between 1.5 mm and 3 mm.

6. Device according to any one of the preceding claims, the laceration system (24) comprising a central portion (53) in which the shaft (50; 50a) bears the blades (54; 54a) and a distal portion (55) in which the shaft (50; 50a) bears a helicoidal distal screw thread (60) oriented in such a way as to move the waste toward the grating (25), the waste moving from the central portion (53) towards the distal portion (55).

7. Device according to any one of the preceding claims, the interception elements (57; 54b, 53a, 53b) being static transverse elements (57; 53a, 53b) forming a rack between which the blades (54; 54a) move as the shaft (50; 50a) rotates, or being mobile elements, notably complementary blades (54b) borne by a complementary shaft (50b) extending parallel to the shaft (50a) and driven in rotation, the rotation of the complementary shaft (54b) being different from that of the shaft, notably in the opposite direction.

8. Device according to any one of the preceding claims, the mis-sort separator (25) comprising a grating (70) able to pass from a position of bearing against the distal end of the screen (22) preventing the mis-sorts from passing, to a position separated from the screen (22) allowing the waste to pass.

9. Device according to any one of the preceding claims, comprising a waste feed hopper (14) feeding the waste laceration system (24), the feed hopper (14) comprising a bag-emptying hatch (16) configured to be able to pass from a closed configuration in which the feed hopper is closed to a substantially horizontal position in which the hopper (14) is open and to be able to receive a bag (120) of waste in the open position.

10. Waste processing method for densifying fermentable waste and separating it from other non-fermentable waste using the device (1) according to any one of the preceding claims.
